(19) Europäisches Patentamt
European Patent Office
Office européen des brevets

(11) **EP 4 435 490 A1**

(12) **EUROPÄISCHE PATENTANMELDUNG**

(43) Veröffentlichungstag:
**25.09.2024  Patentblatt 2024/39**

(51) Internationale Patentklassifikation (IPC):
***G02B 21/00*** (2006.01)    ***G01N 21/64*** (2006.01)

(21) Anmeldenummer: **23163585.5**

(52) Gemeinsame Patentklassifikation (CPC):
**G01N 21/6458; G02B 21/0032; G02B 21/0036; G02B 21/0076; G02B 21/008**

(22) Anmeldetag: **22.03.2023**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Abberior Instruments GmbH**
**37077 Göttingen (DE)**

(72) Erfinder:
• **Reuss, Matthias**
**37083 Göttingen (DE)**
• **Schmidt, Roman**
**37077 Göttingen (DE)**
• **Willemer, Winfried**
**37120 Bovenden (DE)**
• **Donnert, Gerald**
**37083 Göttingen (DE)**

(54) **VERFAHREN, MINFLUX-MIKROSKOP UND COMPUTERPROGRAMM FÜR DIE LOKALISIERUNG ODER FÜR DAS VERFOLGEN VON EMITTERN**

(57)    Die Erfindung betrifft ein Verfahren und ein MIN-FLUX-Mikroskop (1) für die Lokalisierung oder für das Verfolgen eines Emitters (E), wobei die Probe (2) in einem Nahbereich (22) des Emitters (E) durch einen Beleuchtungslichtstrahl (B) mit einer Intensitätsverteilung von Beleuchtungslicht beleuchtet wird, die ein zentrales Minimum aufweist, wobei die Intensitätsverteilung in einem Messzyklus mittels eines Strahlscanners (6) mit mindestens einer optischen Komponente (61,62,63,64) an Abtastpositionen (21) verlagert wird, und wobei zu den Abtastpositionen (21) Emissionen des Emitters (E) erfasst und den Abtastpositionen (21) zugeordnet werden, wobei der Strahlscanner (6) mit Ansteuersignalen gesteuert wird, die Ansteuersignale und/oder Sollbewegungen der mindestens einen optischen Komponente (61,62,63,64) als Funktion der Zeit jeweils durch eine Sinusfunktion oder durch eine gewichtete Summe von Sinusfunktionen mit endlich vielen Summanden beschrieben werden können.

Fig. 5

**Beschreibung**

**Technisches Gebiet der Erfindung**

Die Erfindung betrifft Verfahren für die Lokalisierung oder für das Verfolgen von Emittern in einer Probe unter Nutzung eines in eine Intensitätsverteilung mit einem zentralen Minimum fokussierten Beleuchtungslichts sowie ein MINFLUX-Mikroskop und ein Computerprogramm zur Durchführung des Verfahrens.

**Stand der Technik**

Ein Verfahren zum Bestimmen der Position eines Emitters in einer Probe und zum Verfolgen eines Emitters in einer Probe unter Nutzung eines fokussierten Beleuchtungslichts, dessen Fokus entlang einer Bahn um einen Emitter herum verlagert wird, ist im Stand der Technik bekannt und wird mittlerweile als "orbital method" oder, je nach Anwendung, als "orbital tracking" oder "orbital scanning" bezeichnet.

Ein solches Verfahren wird in der Veröffentlichung "Tracking of fluorescent molecules diffusing within membranes" (Jörg Enderlein, Appl. Phys. B 71, 773-777 (2000); DOI: 10.1007/ s003400000409) vorgeschlagen und in der nur einen Tag später erschienen Veröffentlichung "Positional and Temporal Accuracy of Single Molecule Tracking" (Jörg Enderlein, Single Mol., 1: 225-230. https://doi.org/10.1002/1438-5171) weiter erläutert. Bei dem Verfahren wird ein Gauß'scher Laserstrahl in die Bewegungsebene des zu beobachtenden Moleküls fokussiert. Der Laserfokus wird entlang einer Kreisbahn mit einem festen Radius bewegt. Dasselbe gilt gemäß der als zweites genannten Publikation ebenso für den Fokuspunkt der somit konfokalen Detektion. Nach jedem Umlauf wird der Mittelpunkt des Kreises entsprechend den entlang der Kreisbahn beobachteten Photonendetektionsintensitäten an eine neue Position angepasst, wobei die Richtung der Anpassung optimal und die radiale Verschiebung einfach genähert bestimmt ist. In der letztgenannten Publikation wird auf die erreichbare Genauigkeit einer Positionsbestimmung eines ruhenden Fluorophors, also auf eine Lokalisation, eingegangen. Das Verfahren sei realisierbar unter Verwendung kommerziell verfügbarer Piezoscanner und Piezotische.

In der Publikation "Scanning FCS, a novel method for three-dimensional particle tracking" (Levi V. et al., Biochem Soc Trans. 2003 Oct; 31(Pt 5):997-1000. doi: 10.1042/bst0310997. PMID: 14505467) wird, ohne einen Rückbezug auf irgendeine der beiden oberhalb genannten Publikationen, ein Verfahren nach dem Prinzip des orbital tracking beschrieben. Es wird ein Gauß'scher Laserstrahl zur Zweiphotonen-Anregung von Fluoreszenz genutzt. Dieser wird im Wechsel auf zwei Kreisbahnen jeweils um ein Zentrum auf einer optischen Achse geführt, wobei sich ein Zentrum oberhalb und das andere unterhalb des zu verfolgenden Partikels befindet. Die Verlagerung des Fokus auf der Kreisbahn erfolgt dabei mittels eines Galvo-Scanners. Aus der Differenz der über jeweils mehrere Umläufe gemittelten Fluoreszenzsignale wird auf die axiale Position des Partikels geschlossen. Die laterale Position des Partikels wird bestimmt, indem jeweils aus mehreren Umläufen, abhängig vom Signallevel, um ein Zentrum ein mittleres diskretes Signalprofil bestimmt wird (aufgezeichnet mit 32 kHz bei einer Umlauffrequenz von 250 Hz, also 128 Datenpunkte), welches mittels einer schnellen (fast) Fouriertransformation (FFT) analysiert wird. Die daraus bestimmte Phase der Grundfrequenz, des "AC term", entspreche direkt der Winkelkoordinate der Position des beobachten Teilchens, während aus dem Verhältnis des Gleichanteils, als "DC" bezeichnet, zum "AC term", das heißt aus der Modulation "AC/DC", der radiale Abstand der Position des Partikels zur Umlaufachse bestimmt werden könne; dieser Abstand sei eine monotone Funktion der Modulation, die von der Halbwertsbreite der Punktspreizfunktion und dem Radius der Umlaufbahn abhänge. Der letztgenannte Zusammenhang wird nicht näher erläutert.

In der Dissertation "Trapping and Manipulating Single Molecules in Solution" (Adam E. Cohen, Dissertation, Stanford University, defended Aug. 2006) wird beschrieben, wie mittels Nutzung eines wie beim Orbital Scanning nah um einen fluoreszierenden Partikel umlaufenden Fokus, wobei die Ablenkung des Fokus mittels akusto-optischer Deflektoren erfolgt, ein fluoreszierender Partikel verfolgt wird. Hierfür wird in einer Ausführungsform, bei der die Detektionsrate der Fluoreszenzphotonen kleiner als die Umlauffrequenz des Fokus ist, im Wesentlichen immer dann, wenn während des Umlaufs ein Photon detektiert wird, eine Piezo-Verschiebeeinheit derart bewegt, dass der Fokus in der Fokalebene radial nach außen bewegt wird, wodurch die Bahn des Umlaufs relativ zu dem Partikel derart verschoben wird, dass der Partikel im Zentrum der Bahn gehalten wird. Bei Detektionsraten größer der Umlauffrequenz erfolgt eine Bewegung der Verschiebeeinheit jeweils nach einem vollen Umlauf entsprechend der über die während eines Umlaufs detektierten Photonen.

In der Publikation "Real-time nanomicroscopy via three-dimensional single-particle tracking" (Katayama Y. et al., Chemphyschem. 2009 Oct 5;10(14):2458-64. doi:10.1002/cphc.200900436. PMID: 19760694; PMCID: PMC2857558.) wird schließlich der Begriff "orbital tracking" verwendet.

Beschrieben wird ein orbital tracking, bei dem ein Anregungsfokus innerhalb einer Ebene auf einer Kreisbahn bewegt wird, während die Emission in zwei Ebenen, die bezüglich der konfokalen Ebene gegensinnig axial etwas versetzt sind, detektiert wird. Zudem wird beschrieben, dass das orbital tracking durchgeführt wird, während gleichzeitig unter Verwendung einer anderen Anregungswellenlänge ein Weitfeldbild der Probe aufgenommen wird. Das orbital tracking wird dabei mittels eines Piezo-Scanners durchgeführt.

In der Publikation "Nanoresolution real-time 3D orbital tracking for studying mitochondrial trafficking in vertebrate axons in vivo" (Wehnekamp, F. et al., (2019), eLife 8:e46059., https://doi.org/10.7554/eLife.46059 ) wird ebenfalls eine Kombination von orbital tracking und Weitfeldbildgebung beschrieben. Dabei erfolgt das orbital tracking unter Verwendung eines photoaktivierbaren Fluoreszenzfarbstoffs, was ein Verfolgen einzelner Organellen in einem dicht gefärbten Hintergrund ermöglicht.

Die orbital method wird zumeist in Verbindung mit der Nutzung einer Strahl-Scanvorrichtung auf Basis insbesondere von Galvo-Scannern beschrieben. Bei Verwendung von Galvo-Scannern wird eine Kreisbahn abgefahren, indem eine x- und eine y-Ablenkeinheit mit derselben Frequenz angesteuert werden, wobei der Verlauf der Ablenkung über der Zeit einer Sinusfunktion folgt. Der Radius der Bahn skaliert mit der Amplitude der Ablenkung, das Zentrum der Kreisbahn entspricht dem Mittelwert der Ablenkung.

Die Publikation "Optimal laser scan path for localizing a fluorescent particle in two or three dimensions" (Gregg M. Gallatin and Andrew J. Berglund, Opt. Express 20, 16381-16393 (2012)) befasst sich mit der theoretischen Bestimmung von Abtastbahnen, die optimal sind bzgl. der Genauigkeit, mit der ein Emitter mittels Abtastung durch einen fokussierten Strahl lokalisiert werden kann. Ein Ergebnis der Analyse sei, dass für jede skalare Standard-Gütezahl (standard figure of merit), die mit Hilfe der Fisher-Informationsmatrix definiert werden könne, die optimale Trajektorie damit übereinstimme, den Partikel an den Positionen der maximalen Steigung der Quadratwurzel der Intensität zu halten anstatt an der Stelle der maximalen Steigung der Intensität selbst. In einer Dimension sei dies äquivalent dazu, dass das Verhältnis von Signal zu Rauschen maximiert werde. Die Lokalisationsgenauigkeit könne optimiert werden, indem diese Steigung maximiert werde. Die Analyse ist beschränkt auf die Betrachtung von Partikeln, die sich während der jeweiligen Abtastdauer im Verhältnis zum abgetasteten Bereich nur wenig bewegen. Die Analyse geht zunächst ganz allgemein aus von einer positionsabhängigen Intensitätsverteilung, die verlagert werden kann. Spezielle Ergebnisse werden für Gauß'sche Intensitätsverteilungen bestimmt. So sei für diese eine optimale Trajektorie eine Kreisbahn mit dem Radius entsprechend der Strahlbreite geteilt durch die Quadratwurzel aus 2 (zwei).

Im Stand der Technik der Technik zur Mikroskopie sind verschiedene Abtastverfahren zur Abtastung einer Probe mit einem Lichtfleck bekannt, die sich unter anderem hinsichtlich der Abtastmuster unterscheiden. Die Abtastung erfolgt, indem ein Lichtfleck relativ zu einer Probe verlagert wird, was auch erreicht werden kann, indem die Probe bewegt wird. Zum Beispiel werden in der Konfokalmikroskopie sowie der STED-Mikroskopie Rasterscan-Verfahren, breit angewendet. Mittlerweile wird der Begriff Rasterscan für viel Arten von Abtastung auf einem festen Muster verwendet. Ursprünglich wurde dieser Begriff für Verfahren, bei denen eine Abtastung entlang von Zeilen erfolgt, denen jeweils ein Zeilenvorschub erfolgt, entsprechend dem Bildaufbau bei Fernsehröhren, verwendet. Neben der linienweisen Abtastung sind Abtastverfahren bekannt, bei denen die Abtastung entlang einer Lissajous-Kurve oder entlang einer Zykloide oder entlang einer Spiralbahn oder entlang mehrerer aneinandergesetzter Spiralbahnen erfolgt.

Beispielsweise werden in der internationalen Patentoffenlegungsschrift WO 2004/079405 A2 Scanning-Verfahren zum Beispiel für die Konfokalmikroskopie vorgeschlagen, die eine schnellere Bildaufnahme unter Verwendung mechanischer Strahlablenkeinrichtungen ermöglichen sollen. Hohe Beschleunigungen der mechanischen Strahlablenkeinrichtungen führen zu Belastungen. Um diese Belastungen bei der Verwendung der Strahlablenkeinrichtung zu minimieren, sollen die während des Scannens auftretenden Beschleunigungen minimiert werden. Hierfür sei die Ansteuerung der Ablenkeinrichtung mit sinusoidalen Wellenformen optimal. Es werden verschiedene Ansteuersignale und korrespondierende Scanbahnen eines Lichtstrahls vorgeschlagen. Die Ansteuersignale für eine x-Richtung und eine y-Richtung sind jeweils Sinus- beziehungsweise Kosinussignale, die über die Zeit langsam variiert werden und allenfalls zu einem einzigen bestimmten Zeitpunkt während das Abfahrens einer gesamten Bahn schnell variiert werden. Die resultierenden Scanbahnen sind verschiedene Spiralbahnen oder Kombinationen aus Spiralbahnen.

In den älteren japanischen Patentoffenlegungsschriften JP 2000-098238 A und JP 2005-241321 A werden ebenfalls Scanning-Verfahren beschrieben, bei denen Bildfelder entlang von Spiralbahnen abgetastet werden. Die Spiralbahnen werden erzeugt, indem einzelne Scanner mit Signalen angesteuert werden, die genau oder im Wesentlichen einem Produkt einer zeitabhängigen Sinus- oder Cosinusfunktion zu einer ersten Frequenz und einer weiteren Sinus- oder Cosinusfunktion zu einer zweiten Frequenz entsprechen. In der Schrift JP 2005-241321 A wird ein solches Ansteuersignal derart modifiziert, indem Frequenzen sich abhängig von der Zeit ändern, dass die Tangentialgeschwindigkeit der Abtastbewegung während der Abtastung konstant bleibt. Die Abtastverfahren gemäß der beiden Offenlegungsschriften wurden von Olympus unter dem Namen Tornado Scanning als Scan-Verfahren ausschließlich zur Beleuchtung zum Beispiel für FLIP, FRAP, photo activation, oder photo conversion, uncaging, etc. vermarktet. In der Offenlegungsschrift JP 2000-098238 A wird erwähnt, dass die einzelnen Ablenkeinheiten des Scanners auch jeweils derart mit einem reinen Sinus- oder Cosinussignal angesteuert werden könnten, sodass die Abtastbahn einer Lissajousfigur entspricht.

In der deutschen Patentschrift DE 10 2016 117 096 B4 werden Verfahren zur Bildgebung insbesondere mittels Anwendung der STED-Mikroskopie angegeben, bei denen eine besonders hohe Auflösung dadurch erreicht wird, dass nur ein Nahbereich des abzubildenden Objekts mit einem Intensitätsprofil zum Beispiel des STED-Lichts mit einem zentralen Minimum abgetastet wird, sodass das abzubildende Objekt während der Abtastung zu keinem Zeitpunkt mit den hohen Intensitäten der das Minimum begrenzenden Maxima beaufschlagt wird und daher während der Abtastung nicht gebleicht wird. Die Abtastung mit der Intensitätsverteilung kann auf einem rechteckigen Raster erfolgen oder die Abtastung erfolgt ausgehend vom Zentrum des abzubildenden Objekts auf einer Spiralbahn.

Unter dem Begriff "MINFLUX-Mikroskopie" bzw. "MINFLUX-Verfahren" werden Lokalisierungs- und Trackingverfahren für vereinzelte Emitter zusammengefasst, bei denen am Fokus in der Probe Lichtverteilungen von Beleuchtungslicht, das Lichtemissionen des Emitters anregt, erzeugt werden, wobei die Lichtverteilungen ein lokales Minimum aufweisen, und bei denen die Position eines vereinzelten Emitters durch Erfassen von Lichtemissionen des Emitters für verschiedene Lagen der Minima der betreffenden Lichtverteilungen oder für verschiedene solche Lichtverteilungen in einem Nahbereich des Emitters bestimmt wird, wobei insbesondere ausgenutzt wird, dass von dem Emitter umso weniger Licht emittiert wird, je geringer der Abstand zwischen dem Emitter und dem Minimum der Lichtverteilung ist. Im Minimum selbst soll der Emitter so wenig wie möglich zur Emission angeregt werden, sodass das Ansteigen der Emission mit steigendem Abstand zum Minimum der Lichtverteilung im Verhältnis zur Emission jeweils möglichst groß ist. Aufgrund des letztgenannten Sachverhalts sind MINFLUX-Verfahren, insbesondere im Vergleich zu auf der ortsaufgelösten Erfassung der Emission basierenden Lokalisierungsverfahren wie aus der PALM- oder STORM-Mikroskopie bekannt, besonders photoneneffizient, das bedeutet, bei gleicher Anzahl detektierter Photonen wird mit MINFLUX-Verfahren eine besonders hohe Genauigkeit der Lokalisation erreicht. Dies ermöglicht, dass die mit einer angestrebten Genauigkeit zu lokalisierenden oder zu verfolgenden Emitter im Vergleich zu anderen Lokalisierungsmethoden mit relativ wenig Licht beaufschlagt werden können und daher weniger gebleicht werden.

Ein Verfahren der oben beschriebenen Art ist in der Patentanmeldung DE 10 2011 055 367 A1 für das Einzelmolekül-Tracking beschrieben. Gemäß der dort offenbarten Methode wird die Position eines einzelnen Fluorophors über die Zeit verfolgt, indem eine Anregungslichtverteilung mit lokalem Minimum dem Fluorophor so nachgeführt wird, dass die Fluoreszenzemissionsrate minimal ist.

Das Patent DE 10 2013 114 860 B3 beschreibt insbesondere ein Lokalisationsverfahren, bei dem die Probe an Rasterpunkten mit dem lokalen Minimum einer Anregungslichtverteilung abgetastet wird, um einzelne Fluorophore zu lokalisieren.

Der Begriff "MINFLUX" wird eingeführt in der Publikation "Nanometer resolution imaging and tracking of fluorescent molecules with minimal photon fluxes" (Balzarotti F. et al., Science. 2017 Feb 10;355(6325):606-612 sowie vorab arXiv:1611.03401 [physics.optics] (2016)). Bei der dort beschriebenen Methode wird das MINFLUX-Prinzip konkret umgesetzt, indem kleine Strukturen (DNA-origamis), die stochastisch blinkende Fluorophore aufweisen, in einem Weitfeldbild identifiziert und möglichst genau in das Zentrum des Weitfeldbildes gerückt werden und indem anschließend der Zentrumsbereich mit einer donutförmigen Anregungslichtverteilung in der Mitte und an weiteren Punkten, die ein symmetrisches Muster von Beleuchtungspositionen um die Mitte bilden, mittels elektro-optischer Scanner abgetastet wird; aus den für die einzelnen Beleuchtungspositionen registrierten Photonenzahlen werden dann mit einem *maximum-likelihood*-Schätzer die Positionen der einzeln blinkenden Fluorophore der Strukturen auf wenige Nanometer genau bestimmt. Bei gleicher Anzahl detektierter Photonen ist dabei die Genauigkeit umso höher, je kleiner der von Abtastpositionen umgrenzte Bereich, in dem sich jeweils das zu lokalisierende Fluorophor befindet, ist. Daher sei es vorteilhaft, MINFLUX iterativ an einzelnen Fluorophoren auszuführen, wobei von Schritt zu Schritt der umgrenzte Bereich verkleinert wird.

In der internationalen Patentoffenlegungsschrift WO 2022/029283 A1 wird ein weiteres MINFLUX-Verfahren beschrieben. Bei diesem wird ein Beleuchtungsmuster mit sechs oder mehr Beleuchtungspositionen, die rotationssymmetrisch auf einem Kreis um eine vorher abgeschätzte Position eines Emitters liegen, verwendet. Die Beleuchtungspositionen können dabei schrittweise oder in einer kontinuierlichen Bewegung adressiert werden, wobei im letztgenannten Fall ein Abschnitt der Kreisbahn zusammengefasst als ein diskreter Abtastpunkt behandelt werden kann. In einer Ausführungsform dieses Verfahrens wird eine Hintergrundfluoreszenz bestimmt, die bei der Bestimmung der Position des Fluorophors aus den an den Positionen des Beleuchtungsmusters erhaltenen Messwerten berücksichtigt wird.

In dem europäischen Patent EP 3 372 990 B1 wird neben weiteren MINFLUX-Verfahren ein den MINFLUX-Verfahren in einem Aspekt ähnliches Verfahren beschrieben. Wie bei einem MINFLUX-Verfahren wird ein vereinzeltes Molekül fokussiert mit einer Intensitätsverteilung beaufschlagt, die ein zentrales Minimum, bevorzugt eine Nullstelle, und dieses umgebende Anstiegsbereiche aufweist; ebenfalls wie bei MINFLUX wird dieses Minimum an eine Mehrzahl von Abtastpunkten um den vermuteten Ort des vereinzelten Moleküls platziert und es wird für jeden Abtastpunkt eine Fluoreszenzemission detektiert; aus den so erhaltenen Intensitätswerten oder Photonenzahlen wird die tatsächliche Position hochgenau abgeschätzt. Im Unterschied zu MINFLUX ist die Intensitätsverteilung eine Verteilung von Fluoreszenzverhinderungslicht, insbesondere von STED-Licht. Diese wird gemeinsam mit Anregungslicht angewendet, wobei die Intensitätsverteilung des Anregungslichts kein zentrales lokales Minimum aufweist. Während bei MINFLUX die Fluoreszenzemission dann höher ist, wenn das vereinzelte Moleküle weiter vom zentralen Minimum der Intensitätsverteilung entfernt ist, ist es bei diesem Verfahren umgekehrt.

In der Publikation "A common framework for single-molecule localization using sequential structured illumination" (Luciano A. Masullo et al.; Biophysical Reports, Volume 2, Issue 1, 2022, 100036; https://doi.org/10.1016/j.bpr.2021.100036.) wird dargestellt, dass verschiedene Verfahren zur Einzelmoleküllokalisierung als zu einem gemeinsamen Konzept gehörig aufgefasst werden können. In der Publikation wird unter anderem das in der oberhalb genannten Offenlegungsschrift WO 2022/029283 A1 beschriebene Verfahren unter Verwendung einer Anregungslichtverteilung mit einem zentralen Minimum mit Beleuchtungspositionen, die rotationssymmetrisch auf einem Kreis um eine vorher abgeschätzte Position liegen, als neues Verfahren beschrieben und als "Orbital Tracking with a MINimum" (OTMIN) bezeichnet. Weiter wird ein Verfahren zur Lokalisation aus einem auf einen kleinen Bereich um das zu lokalisierende Fluorophor beschränkten Rasterscan unter Verwendung eines Intensitätsmimums zur Abtastung, wie es im Wesentlichen bereits im Patent DE 10 2013 114 860 B3 beschrieben ist, vorgestellt und als "RASTer scanning with a MINimum" (RASTMIN) bezeichnet. Diese beiden Verfahren werden dann gemeinsam mit unter anderem dem (klassischen) orbital tracking, der Lokalisation aus einem Konfokalscan, der eingeschränkt auf einen kleinen Bereich um das zu lokalisierende Fluorophor ist, und MINFLUX gemäß der in "Nanometer resolution imaging and tracking of fluorescent molecules with minimal photon fluxes" (Balzarotii, s.o.) beschriebenen Version mit vier Abtastpunkten, von denen einer einer zentralen Position entspricht, unter dem Begriff "single-molecule localization by sequential structured illumination" (SML-SSI) subsumiert. Es werden die erzielbaren Genauigkeiten der Lokalisation untersucht. Mit Bezug auf OTMIN wird festgestellt, dass Partikel in der Nähe des Zentrums sehr genau lokalisiert werden könnten, während Partikel in der Nähe des Kreises mit den Abtastpositionen deutlich ungenauer bestimmt werden könnten. In diesem Zusammenhang wird erwähnt, dass die hohe Unsicherheit experimentell vermieden werden könnte, indem Informationen in die Messung eingespeist werden, um ein Field of View zu verwenden, das auf den wohlbehaltenen, inneren Bereich beschränkt ist, z. B. durch periodisches Nachführen des Musters in Echtzeit.

**Aufgabe der Erfindung**

Es ist nun eine Aufgabe der Erfindung, Abtastverfahren zum Bestimmen der Position eines Emitters in einer Probe und zum Verfolgen eines Emitters in einer Probe unter Nutzung eines Beleuchtungslichts, wobei die Intensitätsverteilung des Beleuchtungslichts ein lokales Intensitätsminimum aufweist und wobei die Intensitätsverteilung um einen Emitter herum verlagert wird, derart zu verbessern, dass eine hohe Geschwindigkeit und eine hohe Genauigkeit mit technisch einfacheren Mitteln erreicht wird.

**Lösung**

Die Aufgabe wird durch den Gegenstand der unabhängigen Ansprüche 1 (Verfahren), 15 (MINFLUX-Mikroskop) und 16 (Computerprogramm) gelöst. Vorteilhafte Weiterbildungen der Erfindung sind in den Unteransprüchen 2 bis 14 angegeben und werden im Folgenden beschrieben.

**Definitionen**

Unter Emittern werden in dieser Anmeldung Objekte verstanden, die, wenn sie mit Anregungslicht beleuchtet werden, mit Blick auf die erfindungsgemäßen Messungen als Punktlichtquellen betrachtet werden können. Das von dem Objekt, das als Punktlichtquelle wirkt, ausgehende Licht kann beispielsweise Streulicht sein, das aus einer elastischen Streuung wie beispielsweise einer Rayleigh-Streuung oder einer unelastischen Streuung wie beispielsweise einer Raman-Streuung resultiert oder es kann Lumineszenzlicht, insbesondere Fluoreszenzlicht, sein. Wesentlich für einen Emitter ist, dass von ihm als Reaktion auf das Beleuchten sofort oder mit kleiner Zeitverzögerung Licht ausgeht. Hierbei steht die maximale Zeitverzögerung dann, wenn Bewegungen des Emitters verfolgt werden sollen, in einer Beziehung zu der zeitlichen Auflösung, mit der die Bewegungen der Licht emittierenden Partikel oder Licht emittierenden Einheiten verfolgt werden sollen, und mit der Geschwindigkeit, mit der sich die Partikel oder Einheiten in der Probe bewegen. Die Zeitverzögerungen können bis etwa 10 $\mu$s betragen, liegen in der Regel aber im Bereich bis zu einigen zehn Nanosekunden, häufig im Bereich von 1 bis 10 ns und, wenn die Emission Streulicht ist, bei Null. In dieser Anmeldung dient der Begriff Fluoreszenzemitter der Bezeichnung von Emittern, die als Fluoreszenzpunktlichtquellen wirken. Emitter können beispielsweise metallische Nanopartikel sein. Unter den spezielleren Begriff Fluoreszenzemitter fallen zum Beispiel einzelne Fluoreszenzfarbstoffmoleküle oder deren fluoreszierende chemische Gruppen. Anstelle von Farbstoffen können auch andere fluoreszierende Einheiten wie zum Beispiel *Quantum Dots* oder aufwärtskonvertierende Nanopartikel zur Markierung verwendet werden. Im Kontext der Anmeldung wird dementsprechend unter Anregungslicht nicht nur Fluoreszenzanregungslicht verstanden, sondern allgemein solches Licht, das bewirkt, dass von einem Emitter Licht ausgeht.

Im Kontext der Anmeldung wird ein Emitter dann als vereinzelt bezeichnet, wenn ein Abstand zu einem nächstbenachbarten Emitter, von dem er optisch nicht unterscheidbar ist, zumindest so groß ist wie ein Abstand entsprechend dem Auflösungsvermögen der optischen Anordnung, mit der die Emissionen bei Durchführung des Verfahrens detektiert werden.

Unter STED-Licht wird in dieser Anmeldung, wie allgemein üblich, solches Licht verstanden, das durch die Anregung von stimulierter Emission Fluoreszenzemission unterdrückt. STED-Licht ist im Rahmen dieser Anmeldung eine spezielle Form des Emissionsunterdrückungslichts.

Unter MINFLUX-Verfahren werden in dieser Anmeldung Lokalisierungs- und Trackingverfahren für vereinzelte Emitter zusammengefasst, bei denen am Fokus in der Probe Lichtverteilungen von Beleuchtungslicht, das Lichtemissionen des Emitters anregt, erzeugt werden, wobei die Lichtverteilungen ein lokales Minimum aufweisen, und bei denen die Position eines vereinzelten Emitters durch Erfassen von Lichtemissionen des Emitters für verschiedene Lagen der Minima der betreffenden Lichtverteilungen oder für verschiedene solche Lichtverteilungen in einem Nahbereich des Emitters bestimmt wird, wobei insbesondere ausgenutzt wird, dass von dem Emitter umso weniger Licht emittiert wird, je geringer der Abstand zwischen dem Emitter und dem Minimum der Lichtverteilung ist.

Unter STED-MINFLUX-Verfahren werden in dieser Anmeldung den MINFLUX-Verfahren entsprechend obiger Definition entsprechende Verfahren mit der Abweichung, dass an Stelle der Intensitätsverteilung von Anregungslicht eine Intensitätsverteilung von Emissionsunterdrückungslicht, die mit Anregungslicht überlappt, tritt, verstanden. Dass die Intensitätsverteilung von Emissionsunterdrückungslicht mit Anregungslicht überlappt, bedeutet dabei, dass die Probe in dem Bereich des Intensitätsminimums und der angrenzenden Abschnitte der Intensitätsanstiegsbereiche des Emissionsunterdrückungslichts, innerhalb der ein Emitter liegt, derart mit Anregungslicht beaufschlagt wird, dass eine Emission des Emitters angeregt wird oder in Abwesenheit von Emissionsunterdrückungslicht angeregt werden würde, sodass sich das Emissionsunterdrückungslicht entsprechend seiner Intensitätsverteilung derart auf die angeregte Emission oder das Anregen der Emission auswirkt, dass eine gemessene Emission eines innerhalb der Intensitätsverteilung des Emissionsunterdrückungslichts gelegenen Emitters mit zunehmendem Abstand vom Intensitätsminimum abnimmt. Wenn das Emissionsunterdrückungslicht STED-Licht und der Emitter ein Fluoreszenzemitter ist, bedeutet das, dass die spontane Emission des Fluoreszenzemitters mit zunehmendem Abstand vom Intensitätsminimum des STED-Lichts abnimmt. Die stimulierte Emission des Emitters, die dieselbe Wellenlänge wie das STED-Licht aufweist, trägt, wie in der STED-Mikroskopie üblich, nicht zur gemessenen Emission bei, sie wird beispielsweise mittels eines Filters geblockt. Dass die Intensitätsverteilung von Emissionsunterdrückungslicht mit Anregungslicht überlappt, bedeutet dabei nicht, dass das Anregungslicht und das Emissionsunterdrückungslicht streng gleichzeitig in die Probe eingebracht werden. So ist es zum Beispiel möglich, wie in der STED-Mikroskopie üblich, dass ein kurzer Puls von Anregungslicht angewendet wird, dem ein Puls von STED-Licht als Emissionsunterdrückungslicht unmittelbar nachfolgt. Das Anregungslicht, mit dem die Intensitätsverteilung von Emissionsunterdrückungslicht überlappt, kann beispielsweise eine Intensitätsverteilung aufweisen, wie sie in der konfokalen Mikroskopie üblich ist, also zumindest näherungsweise einer Airyfunktion oder einer Gaußfunktion entsprechen, wobei deren zentrales Maximum mit dem Minimum des Emissionsunterdrückungslichts zusammenfallen kann. Sie kann auch einer Tophat-Funktion entsprechen. Auch eine konstante Anregung im Weitfeld ist möglich.

Der Begriff STED-MINFLUX wird in einem verallgemeinerten Sinn verwendet, er soll keinesfalls so verstanden werden, dass das Emissionsunterdrückungslicht STED-Licht sein muss.

Bei der MINFLUX-Mikroskopie und STED-MINFLUX-Mikroskopie wird die Probe mit fokussiertem Beleuchtungslicht beleuchtet, wobei das Beleuchtungslicht um einen geometrischen Fokus in der Probe herum eine Intensitätsverteilung mit einem zentralen Intensitätsminimum, insbesondere einer Intensitätsnullstelle, ausbildet. Die Lage eines einzelnen Emitters relativ zu dem zentralen Minimum bestimmt dann die Intensität bzw. die Photonenemissionsrate der Lichtemissionen des Emitters, welche zur Positionsbestimmung genutzt wird. Intensitätsverteilungen mit einem zentralen Minimum können insbesondere durch Phasenmodulation des Beleuchtungslichts durch einen Phasenfilter oder einen räumlichen Lichtmodulator (*spatial light modulator*, SLM) im Beleuchtungsstrahlengang, Fokussierung des Beleuchtungslichts mittels einer Objektivlinse und ggf. zusätzlich Zirkularpolarisation des Beleuchtungslichts erzeugt werden. Die Intensitätsverteilung entsteht dann am geometrischen Fokus durch Interferenz.

Wenn in der vorliegenden Anmeldung davon die Rede ist, dass die Intensitätsverteilung an Abtastpositionen verlagert wird, so ist damit gemeint, dass die gesamte Intensitätsverteilung relativ zu der Probe so verlagert wird, dass das zentrale Minimum jeweils an einer Abtastposition angeordnet ist.

Unter einer donutförmigen Intensitätsverteilung wird in dieser Anmeldung eine spezielle Form einer Intensitätsverteilung mit einem zentralen Minimum verstanden, die ein Minimum aufweist, das in allen Raumrichtungen innerhalb einer gegebenen Ebene von Intensitätsanstiegsbereichen umgeben ist.

Erstreckt sich dieses Minimum entlang einer Achse senkrecht zu dieser Ebene, wird dieses Minimum in dieser Anmeldung als 2D-Minimum bezeichnet. Ein 2D-Minimum kann beispielsweise mittels einer Vortex-Phasenplatte im Strahlengang erhalten werden, wobei sich das Minimum dann beispielsweise entlang der optischen Achse eines Objektivs erstrecken kann.

Unter einem 3D-Minimum wird in dieser Anmeldung ein Minimum verstanden, das in allen Raumrichtungen von Intensitätsanstiegsbereichen umgeben ist. Ein 3D-Minimum kann beispielsweise durch Überlagerung zweier Lichtstrahlen, wobei jeweils in einer Pupille die Wellenfront des einen der beiden mittels einer sogenannten *annular phase*

*plate* und die des anderen mittels einer Vortex-Phasenplatte in der Phase moduliert wird, erhalten werden. Auch ein 3D-Minimum kann in einer gegebenen Ebene eine donutförmige Intensitätsverteilung aufweisen.

Der Begriff Lokalisierung beschreibt in dieser Anmeldung ein Verfahren, bei dem eine Position eines einzelnen Emitters in einer Probe ermittelt wird. Im Gegensatz zu herkömmlichen lichtmikroskopischen Verfahren muss hierbei insbesondere keine optische Abbildung der Probe erfolgen. Vielmehr werden bei dem erfindungsgemäßen MINFLUX-Lokalisierungsverfahren Lichtemissionen des Emitters für verschiedene Positionen der Intensitätsverteilung des Beleuchtungslichts detektiert und es wird daraus mit einem Positionsschätzer die Position des Emitters errechnet. Dieser Vorgang kann nacheinander für mehrere einzelne Emitter durchgeführt werden, und die bestimmten Positionen können in einer Lokalisationskarte dargestellt werden, die ein hochauflösendes lichtmikroskopisches Bild ergeben kann.

Unter dem Verfolgen (auch als Tracking bezeichnet) eines Emitters wird das zeitlich aufeinanderfolgende mehrfache Lokalisieren eines Emitters verstanden, der sich in der Probe bewegt. Die entsprechenden Positionen können dann z.B. als Trajektorie dargestellt werden.

Der Begriff "Nahbereich eines Emitters" beschreibt im Kontext der vorliegenden Spezifikation eine Fläche oder ein Volumen (z.B. einen Kreis oder eine Kugel) um eine vermutete Position eines einzelnen Emitters. Die vermutete Position des Emitters kann dabei ein Zentrum der Fläche oder des Volumens bilden. Zur Ermittlung der vermuteten Position kann eine MINFLUX-Lokalisierung oder eine Lokalisierung mit einer unabhängigen Methode, insbesondere mit geringerer Genauigkeit, verwendet werden (beispielsweise Rasterscan mit einer Intensitätsverteilung mit Minimum oder einem regulären Fokus oder PALM (*Photoactivated Localization Microscopy*)/STORM (*Stochastic Optical Reconstruction Microsopy*)-artige Lokalisierung). Der Nahbereich hat insbesondere Abmessungen im Größenbereich der optischen Beugungsgrenze, d.h. weiter insbesondere erstreckt sich der Nahbereich in einer Raumrichtung (weiter insbesondere in zwei Raumrichtungen oder in drei Raumrichtungen) nicht weiter als ein niedriges Vielfaches der Beugungsgrenze (bei einer gegebenen Wellenlänge der Detektion des von dem Emitter ausgehenden Lichts), weiter insbesondere das Zehnfache, weiter insbesondere das Fünffache, weiter insbesondere das Zweifache, weiter insbesondere das 1,5-fache, der Beugungsgrenze. Insbesondere erstreckt sich der Nahbereich in mindestens einer Raumrichtung nicht weiter als die Beugungsgrenze. Insbesondere kann die Beugungsgrenze dem Durchmesser einer Airy-Scheibe entsprechen. Beispielsweise kann der Nahbereich im Falle einer zweidimensionalen Lokalisation des Emitters ein Kreis mit einem Durchmesser im Bereich von 100 nm bis 2 $\mu$m, insbesondere 150 nm bis 2 $\mu$m, weiter insbesondere 200 nm bis 2 $\mu$m, weiter insbesondere 250 nm bis 2 $\mu$m, weiter insbesondere 300 nm bis 2 $\mu$m, sein. Gemäß einem weiteren Beispiel kann der Nahbereich im Falle einer zweidimensionalen Lokalisation ein Kreis mit einem Durchmesser im Bereich von 100 nm bis 2 $\mu$m, insbesondere 100 nm bis 1,5 $\mu$m, weiter insbesondere 100 nm bis 1 $\mu$m, weiter insbesondere 100 nm bis 500 nm, sein. Weitere Beispiele sind insbesondere Kreise mit einem Durchmesser von 150 nm bis 1,5 $\mu$m, 150 nm bis 1,5 $\mu$m, 200 nm bis 1,5 $\mu$m, 250 nm bis 1,5 $\mu$m, 300 nm bis 1,5 $\mu$m, 150 nm bis 1 $\mu$m, 200 nm bis 1 $\mu$m, 250 nm bis 1 $\mu$m, 300 nm bis 1 $\mu$m, 150 nm bis 500 nm, 200 nm bis 500 nm, 250 nm bis 500 nm oder 300 nm bis 500 nm. Das Zentrum des Kreises liegt dabei insbesondere an der vermuteten Position des Emitters. Im Fall einer dreidimensionalen Lokalisation kann der Nahbereich insbesondere eine Kugel mit den oben genannten Durchmessern sein.

Der Nahbereich weist einen Innenbereich und einen Außenbereich auf. D.h. der Innenbereich und der Außenbereich sind jeweils disjunkte Teilflächen oder Teilvolumina des Nahbereichs, wobei der Außenbereich den Innenbereich umschließt. Der Innenbereich und der Außenbereich müssen den Nahbereich nicht vollständig abdecken, d.h. es kann Teilflächen oder Teilvolumina des Nahbereichs geben, die weder zu dem Innenbereich noch zu dem Außenbereich zählen. Insbesondere grenzt der Innenbereich an den Außenbereich an. Alternativ dazu kann sich zwischen dem Innenbereich und dem Außenbereich auch eine weitere Teilfläche oder ein weiteres Teilvolumen des Nahbereichs befinden. Der Innenbereich kann z.B. ein Kreis oder eine Kugel sein, dessen bzw. deren Zentrum an der vermuteten Position des Emitters liegt. In diesem Fall kann der Außenbereich z.B. ein Kreisring oder eine Kugelschale mit einem Zentrum an der vermuteten Position des Emitters sein, der den Innenbereich umschließt, d.h. der Innenbereich und der Außenbereich können durch konzentrische Kreise oder konzentrische Kugeln um das Zentrum begrenzt sein. Alternativ zu Kreisen sind natürlich z.B. auch Ellipsen oder andere, auch unregelmäßige, Formen möglich. Ebenso sind im dreidimensionalen Fall auch Ellipsoide bzw. Ellipsoidschalen denkbar.

Unter einem Messzyklus wird im Kontext der vorliegenden Spezifikation ein Zeitraum verstanden, innerhalb dessen die Intensitätsverteilung des Beleuchtungslichts in der Probe verlagert und Emissionen des zu lokalisierenden oder zu verfolgenden Emitters erfasst werden, wobei die Emissionen zur Positionsbestimmung genutzt werden. Eine solche Positionsbestimmung selbst kann während des Messzyklus, unmittelbar anschließend an den Messzyklus oder nach Abschluss einer gesamten Messung (d.h. insbesondere mehrerer Messzyklen) erfolgen.

Während des Messzyklus wird die Intensitätsverteilung an Abtastpositionen entlang einer Bahn verlagert, also an Abtastpositionen positioniert, die auf der Bahn liegen. Dabei kann in dem Messzyklus die gesamte Bahn durchlaufen werden. Dies ist allerdings nicht zwingend notwendig. Ein Messzyklus kann beispielsweise auch nach dem Durchlaufen eines Teils der Bahn (z.B. von drei Vierteln der Bogenlänge der Bahn) beendet werden. Dies kann z.B. sinnvoll sein, wenn die an den Abtastpositionen entlang des Teils der Bahn erfassten Emissionen bereits eine Positionsbestimmung des Emitters mit ausreichender Genauigkeit erlauben. Andererseits kann es in manchen Fällen auch erforderlich oder gewünscht sein, die Bahn in einem Messzyklus mehrfach zu durchlaufen oder für eine Positionsbestimmung mehrere Messzyklen zu durchlaufen, insbesondere um genug Lichtemissionen des Emitters zu akkumulieren. Im Zuge einer Nachbearbeitung können auch zusätzlich zu den Abtastpositionen eines Messzyklus weitere Abtastpositionen für eine, insbesondere verfeinerte, Positionsbestimmung hinzugenommen werden.

Die Lichtemissionen des Emitters werden mit einer Messvorrichtung erfasst. Diese kann z.B. einen Punktdetektor, wie z.B. eine Avalanche-Fotodiode (APD), einen Fotomultiplier oder einen Hybriddetektor, oder einen ortsauflösenden Detektor wie eine Kamera oder ein sogenanntes APD-Array aufweisen. Insbesondere umfasst die Messvorrichtung weiterhin eine Auswerteelektronik. Die Messvorrichtung ist insbesondere dazu ausgebildet, einzelne von dem Emitter ausgehende Photonen zu erfassen und zu registrieren. Die Lichtemissionen können den Abtastpositionen zugeordnet werden, indem die Messvorrichtung mit dem Strahlscanner (und ggf. weiteren Scanvorrichtungen) synchronisiert wird, so dass für einen Zeitpunkt der Erfassung von Lichtemissionen zumindest näherungsweise bestimmt werden kann, an welcher Position sich die Intensitätsverteilung des Beleuchtungslichts zu diesem Zeitpunkt befand.

Ein Strahlscanner ist im Kontext der vorliegenden Spezifikation eine Vorrichtung, die dazu ausgebildet ist, den Beleuchtungslichtstrahl mittels einer optischen Komponente oder mittels mehrerer optischer Komponenten zu verlagern, so dass der Fokus des Beleuchtungslichts auf oder in der Probe verschoben wird. Die Verschiebung des Fokus erfolgt insbesondere in zwei Raumrichtungen, weiter insbesondere in einer Fokusebene, die senkrecht zu einer optischen Achse eines Objektivs liegt. Die Raumrichtungen können in verschiedensten Koordinatensystemen definiert sein, z.B. in kartesischen Koordinaten (z.B. x- und y-Richtung), in Polarkoordinaten oder in Kugelkoordinaten (z.B. radiale und azimutale Richtung). Der Strahlscanner kann z.B. ein mechanischer Scanner, ein elektrooptischer Deflektor oder ein akustooptischer Deflektor sein. Bei einem mechanischen Scanner wird die mindestens eine optische Komponente, z.B. ein Spiegel, bewegt, insbesondere um eine oder mehrere Drehachsen gedreht, um den Beleuchtungslichtstrahl abzulenken.

Der Strahlscanner erhält von einer Steuereinrichtung Ansteuersignale, insbesondere elektrische Signale, die einen Zustand der mindestens einen optischen Komponente beeinflussen, um den Beleuchtungslichtstrahl an eine gewünschte Position zu verlagern. Wenn es sich bei dem Strahlscanner um einen mechanischen Scanner mit mindestens einer beweglichen optischen Komponente handelt, sind den Ansteuersignalen Sollbewegungen der mindestens einen optischen Komponente zugeordnet, welche durch die Ansteuersignale bestimmt werden.

**Beschreibung der Erfindung**

Ein erster Aspekt der Erfindung betrifft ein Verfahren für die Lokalisierung oder für das Verfolgen eines Emitters (insbesondere ein Verfahren zur Lokalisierung oder zum Verfolgen eines Emitters) mittels eines MINFLUX-Verfahrens oder eines STED-MINFLUX-Verfahrens, in einer Probe, wobei die Probe in einem Nahbereich des Emitters durch einen Beleuchtungslichtstrahl mit einer Intensitätsverteilung von Beleuchtungslicht beleuchtet wird, die ein zentrales Minimum aufweist, wobei das Beleuchtungslicht Anregungslicht oder Emissionsunterdrückungslicht, insbesondere STED-Licht, ist, und wobei das Beleuchtungslicht oder ein anderes Licht den Emitter zur Emission von Licht anregt. Die Intensitätsverteilung wird in einem Messzyklus mittels eines Strahlscanners mit mindestens einer den Beleuchtungslichtstrahl verlagernden optischen Komponente an Abtastpositionen verlagert, wobei zu den Abtastpositionen Emissionen des Emitters erfasst und den Abtastpositionen zugeordnet werden.

Das andere Licht kann für den Fall, dass das Beleuchtungslicht Emissionsunterdrückungslicht ist, mit der Intensitätsverteilung des Beleuchtungslichts überlappendes Anregungslicht sein.

Erfindungsgemäß wird der Strahlscanner mit Ansteuersignalen gesteuert, um die Intensitätsverteilung in dem Messzyklus entlang einer Bahn zu verlagern, wobei die Intensitätsverteilung sowohl an Abtastpositionen in einem Außenbereich des Nahbereichs des Emitters als auch an Abtastpositionen in einem Innenbereich des Nahbereichs des Emitters entlang der Bahn verlagert wird, wobei die Abtastpositionen in mindestens zwei Raumrichtungen um eine vermutete Position des Emitters in der Probe herum gelegen sind, und wobei die Ansteuersignale und/oder durch die Ansteuersignale bestimmte Sollbewegungen der mindestens einen optischen Komponente als Funktion der Zeit jeweils durch eine Sinusfunktion oder durch eine gewichtete Summe von Sinusfunktionen mit endlich vielen Summanden beschrieben werden können.

Bei einem Verfahren für die Lokalisierung ist es insbesondere auch möglich, lediglich die Intensitätsverteilung zu verlagern und die Lichtemissionen des Emitters oder verschiedener Emitter zu erfassen und die Positionsbestimmung nach Abschluss der gesamten Messung durchzuführen. Eine Positionsbestimmung während der Messung erlaubt allerdings z.B. die Durchführung eines iterativen MINFLUX-Verfahrens, was die Präzision der Lokalisation verbessert.

Das Beleuchten der Probe wird insbesondere nur in Teilbereichen des Nahbereichs durchgeführt, kann aber auch den gesamten Nahbereich abdecken.

Die Intensitätsverteilung wird mit dem Strahlscanner möglichst exakt entlang einer kontinuierlichen Bahn bewegt. Dabei kann sich, insbesondere bei höheren Scangeschwindigkeiten, eine Abweichung der tatsächlichen Bahn von der gewünschten Bahn ergeben. Diese Abweichung kann jedoch aufgrund der speziellen Ansteuersignale sowie des speziellen Bahnverlaufs geringgehalten werden.

Durch die Verwendung aus Sinusfunktionen bestehender oder zusammengesetzter Ansteuersignale bzw. Sollbewegungen der mindestens einen optischen Komponente lässt sich die Scan-Bandbreite des Strahlscanners (bzw. insbesondere bei einer digitalen Steuerung ggf. auch die Bandbreite der Steuerung) besonders gut ausnutzen, d.h. eine bestimmte Positionsgenauigkeit kann mit höherer Scangeschwindigkeit erreicht werden als beispielsweise bei sprunghafter Ansteuerung des Scanners. Im Gegensatz zum sogenannten Orbital Tracking, bei dem der Beleuchtungslichtstrahl auf einem Kreis über die Probe gescannt wird, werden die Ansteuersignale bzw. Sollbewegungen erfindungsgemäß so überlagert, dass die Abtastpositionen auf einer Bahn liegen, die sowohl den Außenbereich als auch den Innenbereich des Nahbereichs des Emitters abdecken. Auf diese Weise kann ein MINFLUX-Verfahren durchgeführt werden, das für verschiedene tatsächliche Emitterpositionen eine ähnlich hohe Positionsgenauigkeit erlaubt. Weiterhin können insbesondere mehrere Abtastmuster verschiedener Größen, so wie sie z.B. in iterativen MINFLUX-Verfahren nach dem Stand der Technik verwendet werden, bei dem erfindungsgemäßen Verfahren innerhalb einer Bahn abgetastet werden, was den Steueraufwand verringert.

Weiterhin lassen sich durch die erfindungsgemäße Ansteuerung auch mechanische Strahlscanner, wie z.B. Galvanometerscanner für die MINFLUX-Mikroskopie verwenden, ohne große Nachteile hinsichtlich der Messzeit in Kauf nehmen zu müssen. Dadurch kann vorteilhafterweise auf die Verwendung komplexer und teurer elektrooptischer Deflektoren verzichtet werden.

Die Ansteuersignale bzw. die Sollbewegungen können als Funktion der Zeit jeweils durch eine Sinusfunktion oder eine gewichtete Summe von Sinusfunktionen beschrieben werden. Hierunter fallen selbstverständlich auch Kosinusfunktionen oder gewichtete Summen von Kosinusfunktionen, da, wie dem Fachmann hinlänglich bekannt ist, jede Kosinusfunktion durch eine Phasenverschiebung von $\pi/2$ in eine Sinusfunktion überführt werden kann. Die Summanden der Summen können jeweils positiv oder negativ sein.

Die Funktion der Zeit kann im Falle der Ansteuersignale z.B. einen Verlauf einer Stromstärke oder einer elektrischen Spannung über die Zeit beschreiben, mit der die optische Komponente oder ein mit der optischen Komponente verbundenes Bauteil beaufschlagt wird, wobei das Ausmaß der Strahlverlagerung in vorbekannter Weise monoton von der Stromstärke oder der Spannung abhängt. Wenn die Funktion die Sollbewegung beschreibt, drückt sie insbesondere einen Verlauf einer Position der optischen Komponente relativ zu einer Ortskoordinate (z.B. einen Drehwinkel) über die Zeit aus.

Da die Intensitätsverteilung erfindungsgemäß eine kontinuierliche Bahn in der Probe beschreibt, werden die Abtastpositionen insbesondere, ähnlich wie bei der Laser-Rastermikroskopie, durch die Messzeitpunkte und/oder Messsignalintegrationszeiten der Messvorrichtung festgelegt. Sind die Messsignalintegrationszeiten der Messvorrichtung kurz gegenüber der Bahngeschwindigkeit, so entspricht ein Abtastpunkt dem Punkt auf der Bahn, an dem das Minimum der Intensitätsverteilung zu dem Messzeitpunkt positioniert war. Bewegt sich die Intensitätsverteilung jedoch während einer Messsignalintegrationszeit um eine nicht vernachlässigbare Strecke entlang der Bahn, so kann ein willkürlich gewählter Punkt, z.B. der Anfangspunkt, der Endpunkt oder die Mitte, der überstrichenen Strecke auf der Bahn als Abtastpunkt festgelegt werden, dem die während der Messsignalintegrationszeit erfassten Emissionen des Emitters zugeordnet werden.

Die Abtastpositionen sind erfindungsgemäß in mindestens zwei Raumrichtungen um eine erwartete Emitterposition herum gelegen. Dies schließt nicht aus, dass eine Abtastposition exakt an der erwarteten Emitterposition liegt, d.h. die Bahn muss nicht vollständig um die erwartete Emitterposition herum gelegen sein, sondern kann die erwartete Emitterposition durchlaufen. Dadurch dass die Abtastpositionen in mindestens zwei Raumrichtungen um die erwartete Emitterposition herum gelegen sind, kann die Bahn allerdings keine Linie sein, auf der die erwartete Emitterposition liegt. Die Abtastpositionen können auch in drei Raumrichtungen um die erwartete Emitterposition herum liegen. In diesem Fall kann insbesondere eine dreidimensionale Lokalisierung oder ein dreidimensionales Verfolgen des Emitters durchgeführt werden. Dabei kann insbesondere die Projektion der Bahn in eine Ebene um die Projektion des Emitters in dieselbe Ebene herum gelegen sein.

Gemäß einer Ausführungsform können die Ansteuersignale und/oder die Sollbewegungen der mindestens einen optischen Komponente als Funktion der Zeit jeweils durch eine Sinusfunktion oder eine gewichtete Summe von zehn Sinusfunktionen oder weniger, insbesondere durch eine Sinusfunktion oder eine gewichtete Summe von vier Sinusfunktionen oder weniger, weiter insbesondere durch eine Sinusfunktion oder eine gewichtete Summe von zwei Sinusfunktionen, beschrieben werden. Dies vereinfacht die resultierenden Bahnen und erlaubt eine besonders einfache und zuverlässige Ansteuerung der Scanvorrichtung.

Gemäß einer weiteren Ausführungsform wird der Strahlscanner mit einem ersten Ansteuersignal und einem zweiten Ansteuersignal gesteuert, wobei das erste Ansteuersignal eine Verlagerung der Intensitätsverteilung entlang einer ersten Raumrichtung bewirkt, und wobei das zweite Ansteuersignal eine Verlagerung der Intensitätsverteilung entlang einer zweiten zu der ersten Raumrichtung nicht-parallelen, insbesondere senkrechten, Raumrichtung bewirkt, wobei das erste Ansteuersignal und/oder eine durch das erste Ansteuersignal bestimmte erste Sollbewegung der mindestens einen optischen Komponente und das zweite Ansteuersignal und/oder eine durch das zweite Ansteuersignal bestimmte zweite Sollbewegung der mindestens einen optischen Komponente als Funktion der Zeit jeweils durch eine Sinusfunktion oder durch eine gewichtete Summe von Sinusfunktionen mit endlich vielen Summanden beschrieben werden kann. Die erste und die zweite Raumrichtung können z.B. eine x-Richtung und eine y-Richtung (kartesische Koordinaten) oder eine radiale und eine azimutale Richtung (Polar- oder Kugelkoordinaten) sein.

Gemäß einer Ausführungsform kann das erste Ansteuersignal und/oder die erste Sollbewegung der mindestens einen optischen Komponente als Funktion der Zeit jeweils durch eine Sinusfunktion oder eine gewichtete Summe von zehn Sinusfunktionen oder weniger, insbesondere durch eine Sinusfunktion oder eine gewichtete Summe von vier Sinusfunktionen oder weniger, weiter insbesondere durch eine Sinusfunktion oder eine gewichtete Summe von zwei Sinusfunktionen, beschrieben werden.

Gemäß einer Ausführungsform kann das zweite Ansteuersignal und/oder die zweite Sollbewegung der mindestens einen optischen Komponente als Funktion der Zeit jeweils durch eine Sinusfunktion oder eine gewichtete Summe von zehn Sinusfunktionen oder weniger, insbesondere durch eine Sinusfunktion oder eine gewichtete Summe von vier Sinusfunktionen oder weniger, weiter insbesondere durch eine Sinusfunktion oder eine gewichtete Summe von zwei Sinusfunktionen, beschrieben werden.

Gemäß einer weiteren Ausführungsform steuert das erste Ansteuersignal eine erste optische Komponente des Strahlscanners und das zweite Ansteuersignal steuert eine zweite optische Komponente des Strahlscanners. Die erste optische Komponente kann dabei z.B. ein erster drehbarer Spiegel eines Galvanometer-Scanners sein und die zweite optische Komponente kann ein zweiter drehbarer Spiegel eines Galvanometer-Scanners sein.

Gemäß einer weiteren Ausführungsform steuern das erste Ansteuersignal und das zweite Ansteuersignal gemeinsam eine optische Komponente des Strahlscanners, weiter insbesondere wobei dem ersten Ansteuersignal eine erste Sollbewegung der optischen Komponente zugeordnet ist, und wobei dem zweiten Ansteuersignal eine zweite Sollbewegung der optischen Komponente zugeordnet ist. In diesem Fall kann die optische Komponente z.B. ein um zwei Achsen drehbarer Spiegel sein. Eine solche Konfiguration ist z.B. bei sogenannten MEMS-Scannern bekannt.

Gemäß einer weiteren Ausführungsform kann das erste Ansteuersignal und/oder die erste Sollbewegung durch die Funktion $x = A_x \sin(\omega_1 t + \varphi_1)$ beschrieben werden, wobei das zweite Ansteuersignal und/oder die zweite Sollbewegung durch die Funktion $y = A_y \sin(\omega_2 t + \varphi_2)$ beschrieben werden kann, wobei $A_x$ eine Amplitude des ersten Ansteuersignals und/oder der ersten Sollbewegung bezeichnet, wobei $A_y$ eine Amplitude des zweiten Ansteuersignals und/oder der zweiten Sollbewegung bezeichnet, wobei $t$ die Zeit bezeichnet, wobei $\omega_1$ eine Frequenz des ersten Ansteuersignals und/oder der ersten Sollbewegung bezeichnet, wobei $\omega_2$ eine Frequenz des zweiten Ansteuersignals und/oder der zweiten Sollbewegung bezeichnet, wobei $\varphi_1$ eine Phase des ersten Ansteuersignals und/oder der ersten Sollbewegung bezeichnet, und wobei $\varphi_2$ eine zweite Phase des zweiten Ansteuersignals und/oder der zweiten Sollbewegung bezeichnet.

Die Frequenz des ersten Ansteuersignals und/oder der ersten Sollbewegung ist ungleich der Frequenz des zweiten Ansteuersignals und/oder der zweiten Sollbewegung. Somit ist die resultierende Bahn insbesondere kein Kreis. Insbesondere ist die Phase des ersten Ansteuersignals und/oder der ersten Sollbewegung gleich der Phase des zweiten Ansteuersignals und/oder der zweiten Sollbewegung bzw. deren Phasendifferenz ist Null. Insbesondere sind die Phase des ersten Ansteuersignals und/oder der ersten Sollbewegung und die Phase des zweiten Ansteuersignals und/oder der zweiten Sollbewegung beide gleich Null.

Die aus der Überlagerung der beiden sinusförmigen Ansteuersignale und/oder Sollbewegungen resultierende Bahn der Intensitätsverteilung in der Probe ist unter diesen Bedingungen insbesondere eine Lissajous-Figur. Solche Bahnen zeichnen sich dadurch aus, dass der Innenbereich und der Außenbereich des Nahbereichs überdeckt wird und dass die Scanvorrichtung die Bahnen auch bei hoher Geschwindigkeit mit ausreichender Genauigkeit ansteuern kann. Weiterhin sind solche Figuren punktsymmetrisch gegenüber einem Zentrum, das z.B. an einer erwarteten Emitterposition positioniert werden kann. Gemäß einer weiteren Ausführungsform ist die Amplitude des ersten Ansteuersignals und/oder der ersten Sollbewegung gleich der Amplitude des zweiten Ansteuersignals und/oder der zweiten Sollbewegung. Dies führt insbesondere zu einer Bahn, die näherungsweise einen Kreis ausfüllt, was Vorteile für die Positionsbestimmung mit sich bringt.

Gemäß einer weiteren Ausführungsform ist ein Verhältnis zwischen der Frequenz des ersten Ansteuersignals und/oder der ersten Sollbewegung und der Frequenz des zweiten Ansteuersignals und/oder der zweiten Sollbewegung eine rationale Zahl ungleich 1. Dies führt insbesondere dazu, dass die resultierende Bahn geschlossen ist, also die Lage der Bahn relativ zu der Probe auch bei mehreren Durchläufen gleichbleibt. Hierdurch wird der Rechenaufwand bei der Positionsbestimmung vermindert, da die Verteilung der Abtastpunkte bei gleichbleibenden Parametern in allen Durchläufen der Bahn konstant gehalten werden kann. Weiterhin sind auf diese Weise verschiedene Lokalisierungen besser vergleichbar. Rationale Verhältnisse sind z.B. 2:1, 3:1, 3:2, 4:3 usw.

Gemäß einer weiteren Ausführungsform kann das erste Ansteuersignal und/oder die erste Sollbewegung durch die Funktion $x = A_1^x \sin(\omega_1^x t + \varphi_1^x) \mp A_2^x \sin(\omega_2^x t + \varphi_2^x)$ beschrieben werden, wobei das zweite Ansteuersignal und/oder die zweite Sollbewegung durch die Funktion $y = A_1^y \sin(\omega_1^y t + \varphi_1^y) \mp A_2^y \sin(\omega_2^y t + \varphi_2^y)$

beschrieben werden kann, wobei $A_1^x$ eine erste Amplitude des ersten Ansteuersignals und/oder der ersten Sollbewegung bezeichnet, wobei $A_2^x$ eine zweite Amplitude des ersten Ansteuersignals und/oder der ersten Sollbewegung bezeichnet, wobei $A_1^y$ eine erste Amplitude des zweiten Ansteuersignals und/oder der zweiten Sollbewegung bezeichnet, wobei $A_2^y$ eine zweite Amplitude des zweiten Ansteuersignals und/oder der zweiten Sollbewegung bezeichnet, wobei $t$ die Zeit bezeichnet, wobei $\omega_1^x$ eine erste Frequenz des ersten Ansteuersignals und/oder der ersten Sollbewegung bezeichnet, wobei $\omega_2^x$ eine zweite Frequenz des ersten Ansteuersignals und/oder der ersten Sollbewegung

bezeichnet, wobei $\omega_1^y$ eine erste Frequenz des zweiten Ansteuersignals und/oder der zweiten Sollbewegung bezeichnet, wobei $\omega_2^y$ eine zweite Frequenz des zweiten Ansteuersignals und/oder der zweiten Sollbewegung bezeichnet,

wobei $\varphi_1^x$ eine erste Phase des ersten Ansteuersignals und/oder der ersten Sollbewegung bezeichnet, wobei $\varphi_2^x$

eine zweite Phase des ersten Ansteuersignals und/oder der ersten Sollbewegung bezeichnet, wobei $\varphi_1^y$ eine erste Phase des zweiten Ansteuersignals und/oder der zweiten Sollbewegung bezeichnet, und wobei $\varphi_2^y$ eine zweite Phase des zweiten Ansteuersignals und/oder der zweiten Sollbewegung bezeichnet. Die Amplituden entsprechen gemäß dieser Ausführungsform den Gewichten einer gewichteten Summe von Sinusfunktionen mit zwei Summanden oder können in solche Gewichte durch Normierung überführt werden.

Gemäß einer weiteren Ausführungsform ist die erste Frequenz des ersten Ansteuersignals und/oder der ersten Sollbewegung gleich der ersten Frequenz des zweiten Ansteuersignals und/oder der zweiten Sollbewegung. Gemäß einer weiteren Ausführungsform ist die zweite Frequenz des ersten Ansteuersignals und/oder der ersten Sollbewegung gleich der zweiten Frequenz des zweiten Ansteuersignals und/oder der zweiten Sollbewegung.

Gemäß einer weiteren Ausführungsform ist die erste Amplitude des ersten Ansteuersignals und/oder der ersten Sollbewegung gleich der ersten Amplitude des zweiten Ansteuersignals und/oder der zweiten Sollbewegung. Gemäß einer weiteren Ausführungsform ist die zweite Amplitude des ersten Ansteuersignals und/oder der ersten Sollbewegung gleich der zweiten Amplitude des zweiten Ansteuersignals und/oder der zweiten Sollbewegung. Gemäß einer weiteren Ausführungsform ist die erste Amplitude des ersten Ansteuersignals und/oder der ersten Sollbewegung gleich der zweiten Amplitude des ersten Ansteuersignals und/oder der ersten Sollbewegung. Gemäß einer weiteren Ausführungsform ist die erste Amplitude des zweiten Ansteuersignals und/oder der zweiten Sollbewegung gleich der zweiten Amplitude des zweiten Ansteuersignals und/oder der zweiten Sollbewegung. Gemäß einer weiteren Ausführungsform sind die erste Amplitude des ersten Ansteuersignals und/oder der ersten Sollbewegung, die zweite Amplitude des ersten Ansteuersignals und/oder der ersten Sollbewegung, die erste Amplitude des zweiten Ansteuersignals und/oder der zweiten Sollbewegung und die zweite Amplitude des zweiten Ansteuersignals und/oder der zweiten Sollbewegung gleich groß.

Gleiche Amplituden der Ansteuersignale führen insbesondere zu Bahnen, bei denen die Abtastpunkte innerhalb eines Kreises verteilt sind. Dies hat für MINFLUX-Lokalisierungen stationärer Emitter Vorteile bei der Positionsschätzung, da das Abtastmuster üblicherweise auf eine vorab geschätzte Position des Emitters zentriert wird. Wenn Emitter verfolgt werden (MINFLUX-Tracking), die sich in einer bekannten Raumrichtung, insbesondere gleichförmig, bewegen, kann es auch vorteilhaft sein, die Amplituden der Bewegung in einer ersten Raumrichtung größer zu wählen als die Amplituden der Bewegung in einer zweiten Raumrichtung, und somit die Abtastpunkte innerhalb einer Ellipse anzuordnen, deren Hauptachse parallel zu der Bewegungsrichtung steht.

Gemäß einer weiteren Ausführungsform sind die erste Amplitude des ersten Ansteuersignals und/oder der ersten Sollbewegung, die erste Amplitude des zweiten Ansteuersignals und/oder der zweiten Sollbewegung, die zweite Amplitude des ersten Ansteuersignals und/oder der ersten Sollbewegung und die zweite Amplitude des zweiten Ansteuersignals und/oder der zweiten Sollbewegung identisch.

Gemäß einer weiteren Ausführungsform ist ein Verhältnis zwischen der ersten Frequenz und der zweiten Frequenz des ersten Ansteuersignals und/oder der ersten Sollbewegung und/oder ein Verhältnis zwischen der ersten Frequenz und der zweiten Frequenz des zweiten Ansteuersignals und/oder der zweiten Sollbewegung eine rationale Zahl ungleich 1. Hieraus resultieren insbesondere geschlossene Bahnen, was die Positionsbestimmung vereinfacht, da die Abtastpositionen bei mehreren Durchläufen der Bahn konstant gehalten werden können.

Die aus der Überlagerung der beiden Ansteuersignale und/oder Sollbewegungen, die jeweils als Summen zweier Sinusfunktionen darstellbar sind, resultierende Bahn der Intensitätsverteilung in der Probe ist insbesondere eine Epitrochoide oder eine Hypertrochoide.

Dabei kann bei Epitrochoiden das erste Ansteuersignal bzw. die erste Sollbewegung durch die Funktion $x = A_1 \cos(\omega_1 t) - A_2 \cos(\omega_2 t)$ und das zweite Ansteuersignal bzw. die zweite Sollbewegung durch die Funktion $y = A_1 \sin(\omega_1 t) - A_2 \sin(\omega_2 t)$ dargestellt werden, wobei $A_1$ eine erste Amplitude bezeichnet, $A_2$ eine zweite Amplitude bezeichnet, t die Zeit bezeichnet, $\omega_1$ eine erste Frequenz bezeichnet und $\omega_2$ eine zweite Frequenz bezeichnet. Diese Funktionen sind äquivalent zu der oben dargestellten allgemeinen Form der Summen von Sinusfunktionen mit zwei Summanden, wenn jeweils der erste Summand der Summe ein positives Vorzeichen hat und jeweils der zweite Summand der Summe ein negatives Vorzeichen hat und die folgenden Einschränkungen der allgemeinen Gleichungen gelten:

$$A_1^x = A_1^y;\ A_2^x = A_2^y;\ \omega_1^x = \omega_1^y;\ \omega_2^x = \omega_2^y,\ \varphi_1^x = \varphi_2^x;\ \varphi_1^y = \varphi_2^y;\ \varphi_1^x - \varphi_1^y = \pi/2$$

Bei Hypotrochoiden kann das erste Ansteuersignal bzw. die erste Sollbewegung durch die Funktion $x = A_1 \cos(\omega_1 t) + A_2 \cos(\omega_2 t)$ dargestellt werden und das zweite Ansteuersignal bzw. die zweite Sollbewegung kann durch die Funktion $y = A_1 \sin(\omega_1 t) - A_2 \sin(\omega_2 t)$ dargestellt werden, wobei $A_1$ eine erste Amplitude bezeichnet, $A_2$ eine zweite Amplitude bezeichnet, t die Zeit bezeichnet, $\omega_1$ eine erste Frequenz bezeichnet und $\omega_2$ eine zweite Frequenz bezeichnet. Diese Funktionen sind äquivalent zu der oben dargestellten allgemeinen Form der Summen von Sinusfunktionen mit zwei Summanden, wenn beide Summanden der Summe für das erste Ansteuersignal bzw. die erste Sollbewegung positiv sind, der erste Summand der Summe für das zweite Ansteuersignal bzw. die zweite Sollbewegung positiv ist und der zweite Summand der Summe für das zweite Ansteuersignal bzw. die zweite Sollbewegung ein negatives Vorzeichen hat und die folgenden Einschränkungen der allgemeinen Gleichungen gelten: $A_1^x = A_1^y;\ A_2^x = A_2^y$ ;

$$\omega_1^x = \omega_1^y;\ \omega_2^x = \omega_2^y;\ \varphi_1^x = \varphi_2^x;\ \varphi_1^y = \varphi_2^y;\ \varphi_1^x - \varphi_1^y = \pi/2$$ . Spezielle Formen der Hypotrochoiden sind Rosetten (auch als Kleeblattkurven bezeichnet), Hypozykloiden und Epizykloiden. Bei Rosetten besteht eine feste Beziehung zwischen der ersten Frequenz und der zweiten Frequenz, wobei diese insbesondere in einem Verhältnis stehen, das gleich einer rationalen Zahl ungleich 1 ist. Bei Hypozykloiden und Epizykloiden besteht eine feste Beziehung zwischen Amplituden und Frequenzen.

Bei sogenannten Schleifen kann das erste Ansteuersignal bzw. die erste Sollbewegung durch die Funktion $x = A_1 \cos(\omega_1 t) + A_2 \cos(\omega_2 t)$ dargestellt werden und das zweite Ansteuersignal bzw. die zweite Sollbewegung kann durch die Funktion $y = A_1 \sin(\omega_1 t) + A_2 \sin(\omega_2 t)$ dargestellt werden, wobei $A_1$ eine erste Amplitude bezeichnet, $A_2$ eine zweite Amplitude bezeichnet, t die Zeit bezeichnet, $\omega_1$ eine erste Frequenz bezeichnet und $\omega_2$ eine zweite Frequenz bezeichnet. Diese Funktionen sind äquivalent zu der oben dargestellten allgemeinen Form der Summen von Sinusfunktionen mit zwei Summanden, wenn alle Summanden ein positives Vorzeichen haben und die folgenden Einschränkungen der allgemeinen Gleichungen gelten: $A_1^x = A_1^y;\ A_2^x = A_2^y$ ;

$$\omega_1^x = \omega_1^y;\ \omega_2^x = \omega_2^y;\ \varphi_1^x = \varphi_2^x;\ \varphi_1^y = \varphi_2^y;\ \varphi_1^x - \varphi_1^y = \pi/2$$ . Zu den Schleifen gehören z.B. die Pascal'schen Schnecken.

Gemäß einer weiteren Ausführungsform ist die Scanvorrichtung ein mechanischer Scanner. Solche Scanner haben bewegliche, insbesondere drehbare oder schwenkbare, optische Komponenten, z.B. Spiegel oder Prismen. Gemäß einer weiteren Ausführungsform ist die mindestens eine optische Komponente ein beweglicher Spiegel, insbesondere ein Planspiegel.

Mechanische Scanner können resonant oder nicht-resonant betrieben werden. Resonante mechanische Scanner haben bestimmte erwünschte Eigenfrequenzen, bei denen sie betrieben werden. Zu den nicht-resonanten mechanischen Scannern gehören Galvanometer-Scanner, bei denen typischerweise jeweils ein Galvanometer-Antrieb mit je einem Spiegel gekoppelt ist, so dass durch ein in die Galvanometerspulen eingespeistes Stromsignal ein Winkel des Spiegels um die Drehachse eingestellt werden kann. Bei Galvanometerscannern stehen die Drehachsen der Spiegel typischerweise nicht-parallel zur optischen Achse des einfallenden Lichtstrahls. Für jede Raumrichtung, in der der Strahl abgelenkt werden soll, ist mindestens ein beweglicher mit einem Galvanometer-Antrieb gekoppelter Spiegel vorgesehen. Weiterhin sind mechanische Scanner mit sogenannten Risley-Prismen-Paaren bekannt, wobei der Beleuchtungslichtstrahl nacheinander zwei keilförmige Prismen durchläuft, die um parallele Drehachsen rotieren.

Mechanische Scanner sind typischerweise kostengünstiger, einfacher aufgebaut und robuster als beispielsweise elektrooptische oder akustooptische Scanner, die z.B. in MINFLUX-Mikroskopen nach dem Stand der Technik verwendet werden. Mechanische Scanner lassen sich mit dem erfindungsgemäßen Verfahren vorteilhafterweise schnell und genau ansteuern, um die Intensitätsverteilung des Beleuchtungslichts an Abtastpositionen anzuordnen, die sowohl den Innenbereich als auch den Außenbereich des Nahbereichs des Emitters abdecken. Somit ermöglichen mit dem erfindungsgemäßen Verfahren betriebene mechanische Scanner eine besonders einfache, robuste und kostengünstige Durchführung eines MINFLUX-Verfahrens.

Alternativ lässt sich das erfindungsgemäße Verfahren mit den weiter oben beschriebenen Vorteilen natürlich auch mit elektrooptischen oder akustooptischen Scannern durchführen. Gemäß einer Ausführungsform ist der Strahlscanner ein elektrooptischer Deflektor oder ein akustooptischer Deflektor. Elektrooptische Deflektoren, die mit Sinussignalen angesteuert werden, ermöglichen im Verhältnis zu den Steuerspannungen größere Strahlablenkungen als solche, mit denen die Abtastpunkte wahlfrei angesteuert werden.

Gemäß einer weiteren Ausführungsform wird die Intensitätsverteilung mittels Drehbewegungen der mindestens einen optischen Komponente des Strahlscanners um eine Drehachse oder mehrere Drehachsen verlagert, insbesondere wobei die optische Komponente ein Spiegel oder ein Prisma ist.

Gemäß einer weiteren Ausführungsform weist der Strahlscanner eine erste optische Komponente (insbesondere einen ersten Spiegel oder ein erstes Prisma), die um eine erste Drehachse drehbar ist, und eine zweite optische Komponente (insbesondere einen zweiten Spiegel oder ein zweites Prisma), die um eine zweite Drehachse drehbar ist, auf, wobei die Intensitätsverteilung mittels einer ersten Drehbewegung der ersten optischen Komponente um die erste Drehachse in einer ersten Raumrichtung verlagert wird, und wobei die Intensitätsverteilung mittels einer zweiten Drehbewegung der zweiten optischen Komponente um die zweite Drehachse in einer zweiten Raumrichtung, die zu der ersten Raumrichtung nicht-parallel, insbesondere senkrecht, ist, verlagert wird, so dass die Intensitätsverteilung durch eine Überlagerung der ersten Drehbewegung und der zweiten Drehbewegung auf der Bahn verlagert wird, wobei erste Ansteuersignale und/oder erste Sollbewegungen der ersten optischen Komponente und zweite Ansteuersignale und/oder zweite Sollbewegungen der zweiten optischen Komponente jeweils durch Sinusfunktionen oder gewichtete Summen von Sinusfunktionen mit endlich vielen Summanden beschrieben werden können.

Eine Drehbewegung im Sinne der hier vorliegenden Spezifikation kann mindestens eine vollständige Drehung um 360° um die Drehachse oder eine Drehung um einen Teilwinkel von 360° umfassen. Letzteres wird im technischen Sprachgebrauch auch als Schwenkbewegung bezeichnet.

Die erste Drehachse und die zweite Drehachse sind insbesondere nicht-parallel zueinander.

Die erste optische Komponente und die zweite optische Komponente sind insbesondere hintereinander in einem Beleuchtungsstrahlengang angeordnet, so dass der Beleuchtungslichtstrahl nacheinander von der ersten optischen Komponente und der zweiten optischen Komponente abgelenkt wird. Der Strahlscanner kann weitere optische Komponenten, z.B. weitere an Galvanometerantriebe gekoppelte drehbare Spiegel aufweisen. Beispielsweise sind sogenannte Quad-Scanner bekannt, die vier unabhängig voneinander drehbare, jeweils an Galvanometerantriebe gekoppelte Spiegel aufweisen, von denen zwei Spiegel den Lichtstrahl in einer ersten Raumrichtung (x-Richtung) ablenken und die anderen zwei Spiegel den Lichtstrahl in einer zweiten, zu der ersten Richtung senkrechten, Richtung (y-Richtung) ablenken.

Um ein MINFLUX- oder STED-MINFLUX-Verfahren unter Nutzung eines Objektivs, durch das das Beleuchtungslicht in die Probe geleitet wird, durchzuführen, ist es bevorzugt, dass der Beleuchtungslichtstrahl durch den Strahlscanner in der Pupille des Objektivs nur verkippt und dabei nicht oder jedenfalls möglichst wenig verlagert wird, da eine Verlagerung des Beleuchtungslichtstrahls in der Pupille die Form der Intensitätsverteilung des Beleuchtungslichts im Fokusbereich und damit auch die Form des zentralen Minimimus der Intensitätsverteilung ändern würde, was sich nachteilig auf die Genauigkeit der Lokalisation auswirken könnte. Strahlscanner, die den Beleuchtungslichtstrahl in einer Weise ablenken, die die oben genannte Bedingung erfüllt, können beispielsweise einen um zwei Drehachsen drehbaren Spiegel, der in einer Pupillenebene, das heißt in einer Ebene, in die die Pupille des Objektivs abgebildet wird, aufweisen. Eine weitere Möglichkeit ist ein sogenannter Quad-Scanner mit zwei unabhängig voneinander drehbaren Spiegeln für jede Raumrichtung der Ablenkung, wobei die Ablenkung des Strahls für jede Raumrichtung durch Ansteuerung der zwei Spiegel so durchgeführt wird, dass der abgelenkte Strahl einen festen Punkt der Pupille, insbesondere das Zentrum der Pupille durchquert.

Gemäß einer weiteren Ausführungsform weist der Strahlscanner zwei optische Komponenten auf, die als zwei separate drehbare Spiegel ausgebildet sind, für eine Verlagerung der Intensitätsverteilung in der Probe in einer Richtung auf. Insbesondere weist er für jede zweier, insbesondere zueinander orthogonaler, Raumrichtungen jeweils zwei drehbare Spiegel auf. Die letztgenannte Anordnung ist im Stand der Technik als Quad-Scanner bekannt.

Gemäß einer weiteren Ausführungsform ist der Strahlscanner ein Galvanometerscanner mit an Galvanometerantriebe gekoppelten drehbaren Spiegeln.

Gemäß einer weiteren Ausführungsform weist der Strahlscanner einen oder mehrere an Galvanometerantriebe gekoppelte drehbare Spiegel sowie mindestens einen an einen resonanten Antrieb gekoppelten drehbaren Spiegel. Bei dieser Kombination aus Galvoscanner und resonantem Scanner kann z.B. der resonante Scanner die Intensitätsverteilung mit höherer Frequenz in einer ersten Raumrichtung verlagern und der Galvoscanner kann die Intensitätsverteilung mit niedrigerer Frequenz in einer zweiten Raumrichtung (die nicht-parallel, insbesondere senkrecht zu der ersten Raumrichtung ist) verlagern. Ein resonant angetriebener drehbarer Spiegel, der die Intensitätsverteilung in der ersten Raumrichtung verlagert, kann dabei z.B. in einer Pupillenebene des Objektivs stehen, wobei sich insbesondere eine weitere Pupillenebene zwischen zwei drehbaren Spiegel des Galvoscanners, der die Intensitätsverteilung in der zweiten Raumrichtung verlagert, befindet.

Wenn die Bandbreite des resonanten Scanners wesentlich höher ist als die Bandbreite des Galvoscanners, kann es günstig sein, den resonanten Scanner mit einer deutlich höheren Frequenz oder höheren Frequenzen anzusteuern als den Galvoscanner. Hierbei kann z.B. eine der in dieser Spezifikation beschriebenen Bahnen mit einem entsprechenden Frequenzverhältnis erzeugt werden.

Gemäß einer weiteren Ausführungsform weist der Strahlscanner eine optische Komponente, z.B. einen Spiegel, auf, die um eine erste Drehachse und um eine zweite Drehachse drehbar ist, wobei die Intensitätsverteilung mittels einer ersten Drehbewegung der optischen Komponente um die erste Drehachse in einer ersten Raumrichtung verlagert wird und mittels einer zweiten Drehbewegung der optischen Komponente um die zweite Drehachse in einer zweiten Raumrichtung, die nicht-parallel, insbesondere senkrecht, zu der ersten Raumrichtung ist, verlagert wird, so dass die Intensitätsverteilung durch eine Überlagerung der ersten Drehbewegung und der zweiten Drehbewegung auf der Bahn verlagert wird, wobei die erste Drehbewegung steuernde erste Ansteuersignale und/oder erste Sollbewegungen der optischen Komponente um die erste Drehachse und die zweite Drehbewegung steuernde zweite Ansteuersignale und/oder zweite Sollbewegungen der optischen Komponente um die zweite Drehachse jeweils durch Sinusfunktionen oder gewichtete Summen von Sinusfunktionen mit endlich vielen Summanden beschrieben werden können.

Gemäß einer Ausführungsform ist der Strahlscanner ein MEMS-Scanner mit einem um zwei Drehachsen drehbaren Spiegel. Solche Scanner sind insbesondere auch als resonante Scanner mit hoher Bandbreite erhältlich.

Gemäß einer weiteren Ausführungsform weist der Strahlscanner mindestens zwei optische Komponenten (insbesondere hintereinander in einem Beleuchtungsstrahlengang angeordnete, drehbare, Spiegel) auf, die dazu ausgebildet sind, die Intensitätsverteilung in derselben Raumrichtung in der Probe zu verlagern, wobei nur eine der mindestens zwei optischen Komponenten mit den sinusförmigen oder als gewichtete Summen von Sinusfunktionen beschreibbaren Ansteuersignalen gesteuert wird, um die Intensitätsverteilung in dem Messzyklus entlang der Bahn zu verlagern, insbesondere wobei die mindestens eine übrige optische Komponente in Ruhe gehalten oder mit einem weiteren Ansteuersignal gesteuert wird. Die von dem weiteren Ansteuersignal gesteuerte optische Komponente kann z.B. eine periodische Bewegung mit einer geringeren Amplitude und/oder einer geringeren Frequenz oder eine nichtperiodische Bewegung ausführen. Bei Scannern mit mehreren hintereinander im Beleuchtungsstrahlengang angeordneten optischen Komponenten kann z.B. eine der optischen Komponenten aufgrund ihrer Anordnung in dem optischen System dieselbe Amplitude der Sollbewegung in der Probe mit einer geringeren Winkelauslenkung (mit anderen Worten: einem geringeren Hub) realisieren als die andere optische Komponente. In derartigen Fällen kann durch eine Ansteuerung nur einer der optischen Komponenten eine höhere Frequenz und damit eine höhere Scangeschwindigkeit erreicht werden.

Gemäß einer weiteren Ausführungsform weist der Strahlscanner einen ersten drehbaren Spiegel und einen zweiten drehbaren Spiegel auf, wobei der Strahlscanner dazu ausgebildet ist, mittels zusammenwirkender Drehbewegungen des ersten drehbaren Spiegels um eine erste Drehachse und des zweiten drehbaren Spiegels um eine zweite Drehachse die Intensitätsverteilung entlang einer ersten Richtung in der Probe zu verlagern, insbesondere wobei die erste Drehachse parallel zu der zweiten Drehachse ist.

Gemäß einer weiteren Ausführungsform weist der Strahlscanner weiterhin einen dritten drehbaren Spiegel und einen vierten drehbaren Spiegel auf, wobei der Strahlscanner dazu ausgebildet ist, mittels zusammenwirkender Drehbewegungen des dritten drehbaren Spiegels um eine dritte Drehachse und des vierten drehbaren Spiegels um eine vierte Drehachse die Intensitätsverteilung entlang einer zweiten Richtung, die nicht-parallel, insbesondere senkrecht, zu der ersten Richtung ist, zu verlagern, insbesondere wobei die dritte Drehachse parallel zu der vierten Drehachse ist.

Gemäß einer weiteren Ausführungsform ist der Strahlscanner dazu ausgebildet, den Beleuchtungslichtstrahl so zu verlagern, dass der Beleuchtungslichtstrahl während des Verlagerns der Intensitätsverteilung in einer Bildebene eines den Beleuchtungslichtstrahl in die Probe fokussierenden Objektivs in einer Pupille des Objektivs stationär bleibt (d.h. lediglich verkippt wird), wobei die Bildebene zu einer Fokusebene in der Probe konjugiert ist, und wobei eine Strahlachse des Beleuchtungslichtstrahls eine optische Achse des Objektivs in der Bildebene schneidet oder mit ihr zusammenfällt.

Gemäß einer weiteren Ausführungsform weist der erste drehbare Spiegel einen größeren Abstand von der Bildebene auf als der zweite drehbare Spiegel, insbesondere wobei der dritte drehbare Spiegel einen größeren Abstand von der Bildebene aufweist als der vierte drehbare Spiegel.

Gemäß einer weiteren Ausführungsform ist einer der drehbaren Spiegel in einer Pupillenebene eines den Beleuchtungslichtstrahl in die Probe fokussierenden Objektivs angeordnet, wobei die Pupillenebene zu einer Rückapertur des Objektivs konjugiert ist.

Gemäß einer weiteren Ausführungsform ist eine Pupillenebene eines die Probe fokussierenden Objektivs zwischen mehreren drehbaren Spiegeln des Strahlscanners angeordnet, wobei die Pupillenebene zu einer Rückapertur des Objektivs konjugiert ist.

Gemäß einer Ausführungsform weist der Strahlscanner zwei jeweils mit einem dispersiven und/oder reflektierenden optischen Element gekoppelten Rotatoren auf, wobei die Rotatoren um, insbesondere parallele, Rotationsachsen rotieren. Dabei können die Rotationsachsen jeweils parallel zu einer optischen Achse des Beleuchtungslichtstrahls angeordnet sein. Solche Scanner werden, für den Fall, dass die dispersiven Elemente keilförmige Prismen sind, auch als Risley-Prismenpaar-Scanner bezeichnet. Solche Scanner können die in dieser Spezifikation beschriebenen Bahnen mit hoher Geschwindigkeit erzeugen. Die Strahlablenkung ist jedoch im Fall von dispersiven Elementen wellenlängenabhängig. Die Ablenkung durch die beiden optischen Elemente erfolgt dabei in einer radialen Richtung und einer azimutalen Richtung.

Der Strahlscanner kann auch eine Kombination eines um eine erste Drehachse rotierbaren dispersiven und/oder reflektiven optischen Elements und einer um eine zweite Drehachse drehbaren, optischen Komponente (insbesondere eines an einen Galvanometerantrieb gekoppelten Spiegels) umfassen, wobei die erste Drehachse parallel zu der optischen Achse des Beleuchtungslichtstrahls steht, und wobei die zweite Drehachse nicht-parallel zu der ersten Drehachse ist.

Gemäß einer weiteren Ausführungsform weisen auf ihr Maximum normierte Frequenzspektren der die ersten Drehbewegungen beschreibenden Funktionen untereinander ein identisches erstes normiertes Frequenzleistungsspektrum auf, wobei die auf ihr Maximum normierten Frequenzspektren der die zweiten Drehbewegungen beschreibenden Funktionen ein identisches zweites normiertes Frequenzleistungsspektrum aufweisen.

Gemäß einer weiteren Ausführungsform sind das erste und das zweite normierte Frequenzleistungsspektrum miteinander identisch.

Gemäß einer weiteren Ausführungsform ist die Bahn der Intensitätsverteilung in der Probe geschlossen. Eine geschlossene Bahn lässt sich z.B. durch Erzeugung von Lissajous-Figuren oder Hypotrochoiden mit einem festen, rationalen, Frequenzverhältnis erzeugen. Geschlossene Bahnen haben insbesondere den Vorteil, dass die Abtastpositionen bei mehreren aufeinander folgenden Durchläufen identisch gewählt werden können, was die Positionsbestimmung erleichtert.

Gemäß einer weiteren Ausführungsform ist die Bahn punkt- oder rotationssymmetrisch bezüglich einer erwarteten Position des Emitters. Dies hat den Vorteil, dass die erfassten Lichtemissionen für alle tatsächlichen Lagen des Emitters relativ zu einer erwarteten Position des Emitters vergleichbar sind. Dies hat eine verbesserte Positionsschätzung zur Folge.

Gemäß einer weiteren Ausführungsform ist die Bahn achsensymmetrisch bezüglich einer Geraden, auf der eine erwartete Position des Emitters liegt. Diese Ausführungsform kann z.B. dann vorteilhaft sein, wenn bekannt ist, dass sich der Emitter parallel zu der Geraden bewegt.

Gemäß einer weiteren Ausführungsform ist zumindest eine Teilmenge der Abtastpositionen zumindest näherungsweise rotationssymmetrisch um eine erwartete Position des Emitters angeordnet. Dies hat den Vorteil, dass die erfassten Lichtemissionen für alle tatsächlichen Lagen des Emitters relativ zu einer erwarteten Position des Emitters vergleichbar sind. Dies hat eine verbesserte Positionsschätzung zur Folge.

Gemäß einer weiteren Ausführungsform durchquert die Bahn den Innenbereich und/oder den Außenbereich während eines Messzyklus mehrfach. Auf dieser Weise können insbesondere bereits die aus einem Durchlauf der Bahn resultierenden Abtastpunkte besonders flexibel gewählt werden.

Gemäß einer weiteren Ausführungsform weist die Bahn ein Zentrum auf, insbesondere wobei das Zentrum ein Schwerpunkt der Bahn und/oder ein Symmetriezentrum der Bahn ist. Insbesondere wird das Zentrum an einer vermuteten Position des Emitters angeordnet. Diese Ausführungsform hat den Vorteil, dass eine Abtastposition im Zentrum gewählt werden kann. Diese Position kann entweder zur Positionsbestimmung oder zur Bestimmung eines Kontrollwerts für eine Hintergrundkorrektur der Positionsbestimmung verwendet werden, der ausnutzt, dass das Signal über dem Hintergrund umso geringer ist, je näher eine Abtastposition an der tatsächlichen Emitterposition liegt.

Gemäß einer weiteren Ausführungsform wird aus den den Abtastpositionen zugeordneten Emissionen des Emitters eine Position des Emitters geschätzt. Dies kann z.B. in aus dem Stand der Technik bekannter Weise mit einem Positionsschätzer, z.B. einem *least-mean-squares*-Schätzer oder einem *maximum-likelihood*-Schätzer erfolgen. Bei einer MINFLUX-Lokalisierung sind die Emissionen (d.h. die Intensität oder Photonenrate) umso höher, je weiter die tatsächliche Emitterposition von der Position des Minimums der (Anregungs-)Intensitätsverteilung entfernt ist. Bei einer STED-MINFLUX-Lokalisierung sind dagegen die Emissionen umso höher, je näher der Emitter an der Position des Minimums der (STED-)Intensitätsverteilung angeordnet ist.

Gemäß einer weiteren Ausführungsform wird nach dem Messzyklus ein weiterer Messzyklus durchgeführt, wobei die Bahn für den weiteren Messzyklus relativ zu der Probe auf Basis einer in dem vorhergehenden Messzyklus geschätzten Emitterposition verschoben und/oder skaliert wird. Auf diese Weise kann z.B. ein iteratives MINFLUX-Verfahren umgesetzt werden. Dabei wird die Position des Emitters wiederholt bestimmt, wobei beispielsweise ein Zentrum der Bahn nach einer Positionsbestimmung an der zuletzt bestimmten Emitterposition angeordnet wird. Optional kann bei dieser Repositionierung das Muster der Abtastpositionen, d.h. hier die Bahn, verkleinert werden, indem insbesondere Amplituden der Sinusfunktionen verringert werden. Dies erhöht die Positionsgenauigkeit der Lokalisierung, vorausgesetzt dass sich der Emitter in einem sogenannten Fangbereich der Lokalisation befindet, in dem er eindeutig lokalisierbar ist. Dabei kann die Lichtintensität des Beleuchtungslichts erhöht werden, um trotz des kleineren Abstands des Emitters vom Minimum der Intensitätsverteilung eine ähnlich hohe Photonenrate zu erzielen. Alternativ zu diesem Verfahren kann z.B. auch eine Skalierung der Bahn ohne eine Repositionierung durchgeführt werden.

Der weitere Messzyklus kann wie oben beschrieben zur genaueren Lokalisierung des Emitters genutzt werden, dessen Emissionen bereits in dem vorhergehenden Messzyklus erfasst wurden. Eine andere Möglichkeit ist insbesondere die Verschiebung (mit oder ohne Skalierung) der Lage der Bahn beim Verfolgen eines sich bewegenden Emitters in der Probe (MINFLUX-Tracking). Dabei kann insbesondere die Lage der Bahn nach einer Positionsbestimmung entlang der (aus den vorherigen Messpunkten ermittelten) Bewegungsrichtung des Emitters verschoben werden.

Gemäß einer weiteren Ausführungsform werden vor dem weiteren Messzyklus Parameter der Funktionen, die die Ansteuersignale und/oder Sollbewegungen der die Intensitätsverteilung verlagernde mindestens eine optische Komponenten beschreibt, derart angepasst, dass in dem weiteren Messzyklus ein kleinerer Bereich abgetastet wird.

Gemäß einer weiteren Ausführungsform werden die Ansteuersignale für den weiteren Messzyklus auf Basis der in dem vorhergehenden Messzyklus geschätzten Emitterposition angepasst. Dabei können z.B. Amplituden, Phasen oder Frequenzen der Sinusfunktionen angepasst werden, um die Bahn anzupassen oder es können der Funktion z.B. auch weitere Sinusfunktionen hinzugefügt werden. Insbesondere können die Ansteuersignale z.B. auch so geändert werden, dass zwischen verschiedenen Bahnformen gewechselt wird, beispielsweise von einer Lissajous-Kurve zu einer Rosette.

Gemäß einer weiteren Ausführungsform wird die mindestens eine optische Komponente des Strahlscanners oder eine weitere optische Komponente des Strahlscanners oder eine Verlagerungseinheit vor und/oder nach dem Messzyklus mit einem Stellsignal beaufschlagt, um eine Lage der Bahn relativ zu der Probe zu verschieben. Die Bewegung der Intensitätsverteilung entlang der Bahn mit einer durch das Stellsignal hervorgerufenen Bewegung überlagert. Die Verlagerungseinheit kann z.B. ein weiterer Strahlscanner (insbesondere ein mechanischer Scanner, wie ein Galvoscanner oder ein Piezoscanner, ein verformbarer Spiegel, ein EOD oder ein AOD) sein. Alternativ dazu kann die Verlagerungseinheit die Probe relativ zu dem Objektiv des MINFLUX-Mikroskops verlagern. Im letztgenannten Fall kann die Verlagerungseinheit z.B. ein mit einem Probentisch gekoppelter Piezoscanner oder Piezoaktuator sein. Durch das Stellsignal kann die Bahn z.B. in einem iterativen MINFLUX-Verfahren auf eine neu ermittelte Emitterposition zentriert werden.

Gemäß einer weiteren Ausführungsform wird die Verschiebung der Bahn relativ zu der Probe und/oder eine Skalierung der Bahn an einem vorbestimmten Punkt der Bahn durchgeführt, insbesondere wobei der vorbestimmte Punkt so ausgewählt wird, dass eine minimale Beschleunigung und/oder ein minimaler Ruck der mindestens einen optischen Komponente resultiert und/oder dass ein Relaxationsvorgang der mindestens einen optischen Komponente optimiert, insbesondere zeitoptimiert, ist. Dabei ist der Ruck die Änderung der Beschleunigung, also die dritte Ableitung der Ortskurve nach der Zeit. Mit einem vorbestimmten Punkt ist ein Punkt gemeint, der bereits vor der Messung bzw. vor der Durchführung des Messzyklus für eine bestimmte Bahn festgelegt wurde. Natürlich kann es auch mehrere vorbestimmte Punkte geben. In diesem Fall wird die Verschiebung und/oder Skalierung insbesondere an dem nächsten vorbestimmten Punkt durchgeführt, der von dem Minimum der Intensitätsverteilung beim Abfahren der Bahn erreicht wird. Bei der Festlegung der vorbestimmten Punkte kann eine Antwortzeit des Strahlscanners berücksichtigt werden, wenn diese nicht klein gegenüber der Geschwindigkeit der Intensitätsverteilung entlang der Bahn ist.

Beispielsweise können die vorbestimmten Punkte Nulldurchgänge sein, also Punkte, bei denen die Position des Minimums der Intensitätsverteilung des Beleuchtungslichts in einer Raumrichtung oder in mehreren Raumrichtungen auf einer Achse eines Koordinatensystems liegt. Ein Nulldurchgang in zwei oder drei Raumrichtungen ist dann ein Nullpunkt, der z.B. ein Zentrum der Bahn bilden kann. Eine Verschiebung oder Skalierung an einem solchen Nulldurchgang hat im Fall eines mechanischen Strahlscanners insbesondere den Vorteil, dass die optische Komponente bzw. die jeweilige optische Komponente bei Erreichen dieses Punktes unbeschleunigt ist.

Eine andere Möglichkeit besteht darin, Verschiebungen der Lage der Bahn in eine gewünschte Richtung an Punkten der Bahn durchzuführen, an denen sich die Intensitätsverteilung bereits näherungsweise in die gewünschte Richtung bewegt. Ein solcher Punkt könnte z.B. ein Punkt der Bahn sein, dessen Tangente in der gewünschten Richtung verläuft. Auf diese Weise kann für mechanische Scanner die für die Verschiebung der Lage der Bahn erforderliche Beschleunigung minimiert werden.

Nach einer Verschiebung oder Skalierung kann der Strahlscanner bzw. die mindestens eine optische Komponente eine Relaxationszeit aufweisen, in der die von der Intensitätsverteilung überstrichene Bahn in der Probe eine (größere, nicht vernachlässigbare) Abweichung zu der gewünschten neuen Bahn aufweist, Insbesondere können die vorbestimmten Punkte für eine bestimmte Bahn so gewählt sein, dass die Relaxationszeit minimal ist.

Ein zweiter Aspekt der Erfindung betrifft ein MINFLUX-Mikroskop für die Lokalisierung oder das Verfolgen eines Emitters (insbesondere zur Lokalisierung oder zum Verfolgen eines Emitters), insbesondere nach einem Verfahren gemäß dem ersten Aspekt, aufweisend eine Lichtquelle, die dazu ausgebildet ist, einen Beleuchtungslichtstrahl zu erzeugen, eine Beleuchtungsoptik, die dazu ausgebildet ist, durch den Beleuchtungslichtstrahl eine Probe in einem Nahbereich eines Emitters mit einer Intensitätsverteilung von Beleuchtungslicht mit einem zentralen Minimum zu beleuchten, wobei das Beleuchtungslicht Anregungslicht oder Emissionsunterdrückungslicht, insbesondere STED-Licht, ist, und wobei das Beleuchtungslicht oder ein anderes Licht den Emitter zur Emission von Licht anregt, einen Strahlscanner mit einer den Beleuchtungslichtstrahl verlagernden optischen Komponente, wobei der Strahlscanner dazu ausgebildet ist, die Intensitätsverteilung in einem Messzyklus an Abtastpositionen zu verlagern, und eine Messvorrichtung, die dazu ausgebildet ist, zu den Abtastpositionen Emissionen des Emitters zu erfassen.

Erfindungsgemäß weist das MINFLUX-Mikroskop eine Steuereinheit auf, die dazu ausgebildet ist, den Strahlscanner mit Ansteuersignalen zu steuern, um die Intensitätsverteilung in dem Messzyklus entlang einer Bahn zu verlagern, so dass die Intensitätsverteilung sowohl an Abtastpositionen in einem Außenbereich des Nahbereichs des Emitters als auch an Abtastpositionen in einem Innenbereich des Nahbereichs des Emitters entlang der Bahn verlagert wird, wobei die Abtastpositionen in mindestens zwei Raumrichtungen um eine vermutete Position des Emitters in der Probe herum gelegen sind, wobei die Ansteuersignale und/oder Sollbewegungen der mindestens einen optischen Komponente als Funktion der Zeit jeweils durch eine Sinusfunktion oder durch eine gewichtete Summe von Sinusfunktionen mit endlich vielen Summanden beschrieben werden können.

Das andere Licht ist für den Fall, dass das Beleuchtungslicht STED-Licht ist, insbesondere mit der Intensitätsverteilung des Beleuchtungslicht überlappendes Anregungslicht.

Die Steuereinheit kann ein herkömmlicher, für diverse Aufgaben ausgelegter Computer oder ein spezialisiertes Steuergerät, z.B. ein Mikroprozessor, ein *field programmable gate array* (FPGA) oder ein *application specific integrated circuit* (ASIC) sein. Die Steuereinheit kann mit der Recheneinheit eine gemeinsame Einheit bilden oder separat von der Recheneinheit ausgeführt sein.

Gemäß einer Ausführungsform weist das MINFLUX-Mikroskop eine Recheneinheit auf, die dazu ausgebildet ist, aus den den Abtastpositionen zugeordneten Emissionen des Emitters eine Position des Emitters zu schätzen. Dazu kann die Recheneinheit einen hardware- oder softwareseitig implementierten Positionsschätzalgorithmus durchführen, bei dem z.B., wie aus dem Stand der Technik bekannt, ein *least-mean-square*-Schätzer oder ein *maximum-likelihood-Schätzer* verwendet wird.

Gemäß einer weiteren Ausführungsform weist die Beleuchtungsoptik ein Objektiv auf, das dazu ausgebildet ist, den Beleuchtungslichtstrahl in die Probe zu fokussieren und/oder die von dem Emitter ausgehenden Emissionen zu einem Detektionslichtstrahl zu bündeln.

Gemäß einer weiteren Ausführungsform weist die Beleuchtungsoptik einen Lichtmodulator auf, der dazu ausgebildet ist, eine Amplitude und/oder eine Phase des Beleuchtungslichts zu modulieren, so dass an einem Fokus in der Probe die Intensitätsverteilung des Beleuchtungslichts mit dem lokalen Minimum gebildet wird. Bei dem Lichtmodulator kann es sich z.B. um einen Phasenfilter oder eine Phasenplatte mit fest aufgeprägtem Phasenmuster oder um einen ansteuerbaren räumlichen Lichtmodulator (z.B. vom Flüssigkristall-Typ) handeln, bei dem das dargestellte Phasenmuster durch Steuerbefehle veränderbar ist. Ein solcher Lichtmodulator kann im Transmissionsmodus, im Reflexionsmodus oder im Beugungsmodus betrieben werden. Im letzten Fall wird das Phasenmuster insbesondere mit einem Beugungsgitter überlagert.

Die Lichtquelle ist insbesondere ein kontinuierlicher oder gepulster Laser. Wenn das MINFLUX-Mikroskop zur Durchführung eines STED-MINFLUX-Verfahrens ausgebildet ist, ist insbesondere zusätzlich zu einem Anregungslaser ein STED-Laser vorgesehen. Alternativ dazu können auch Anregungs- und STED-Licht aus einer Weißlichtquelle in bekannter Weise ausgekoppelt werden.

Der Strahlscanner ist insbesondere ein mechanischer Scanner (insbesondere ein Galvanometerscanner, ein resonanter mechanischer Scanner, eine Kombination von Galvanometerscanner und resonantem Scanner, ein MEMS-Scanner, ein Risley-Prismenpaar-Scanner oder ein Piezoscanner oder eine Kombination aus einem um eine zur optischen Achse des Beleuchtungslichtstrahls parallele Drehachse rotierenden dispersiven Elements und einem um eine andere Drehachse drehbahren Galvanometerspiegel), ein elektrooptischer Scanner oder ein akustooptischer Scanner. Die mindestens eine optische Komponente ist insbesondere ein Spiegel oder ein Prisma.

Die Beleuchtungsoptik weist insbesondere einen Strahlteiler, z.B. einen dichroitischen Spiegel, zur Trennung des von der Probe ausgehenden Emissionslichts von dem Beleuchtungslicht auf. Der Strahlscanner kann zwischen dem Strahlteiler und dem Objektiv angeordnet sein, so dass das von der Probe ausgehende Emissionslicht von dem Strahlscanner entscannt wird. Alternativ dazu kann sich der Strahlscanner zwischen der Lichtquelle und dem Strahlteiler befinden, so dass das Emissionslicht nicht entscannt auf den Detektor gelenkt wird (*non-descanned*-Konfiguration).

Das MINFLUX-Mikroskop kann zusätzlich zu dem Strahlscanner optional eine weitere Verlagerungsvorrichtung, z.B. einen einen verformbaren Spiegel oder einen weiteren Strahlscanner (etwa einen Galvanometerscanner oder einen elektrooptischen oder akustooptischen Deflektor) aufweisen, der das Beleuchtungslicht und/oder das Emissionslicht verlagert.

Gemäß einer weiteren Ausführungsform ist die Messvorrichtung ein Punktdetektor (insbesondere eine Avalanche-Photodiode, APD, ein Photomultiplier oder ein Hybriddetektor) oder ein ortsauflösender Detektor (insbesondere eine Kamera, weiter insbesondere eine CMOS- oder CCD-Kamera, oder ein Array von Punktdetektoren wie z.B. APDs, Photomultipliern, oder Hybriddetektoren). Die Messvorrichtung kann konfokal angeordnet sein, das heißt in einer zu einer Fokusebene in der Probe konjugierten Bildebene. Dafür kann einem Detektionsstrahlengang zwischen dem Strahlteiler und der Messvorrichtung eine konfokale Lochblende angeordnet sein. Für die MINFLUX-Mikroskopie ist allerdings eine konfokale Detektion nicht zwingend notwendig.

Ein dritter Aspekt der Erfindung betrifft ein Computerprogramm aufweisend Befehle, die bewirken, dass das MINFLUX-Mikroskop nach dem zweiten Aspekt das Verfahren nach dem ersten Aspekt ausführt. Das Computerprogramm kann in Form von Software- oder Hardwarekomponenten realisiert sein und kann auf einem flüchtigen oder nichtflüchtigen Speichermedium gespeichert sein. Dieses kann physisch mit der Steuereinheit und/oder der Recheneinheit verbunden oder in einer Einheit integriert sein. Alternativ kann der Speicher auch physisch getrennt von, aber in Kommunikationsverbindung mit der Steuereinheit und/oder der Recheneinheit sein.

Weitere Ausführungsformen des MINFLUX-Mikroskops nach dem zweiten Aspekt und des Computerprogramms nach dem dritten Aspekt ergeben sich aus den weiter oben dargestellten Ausführungsformen des Verfahrens nach dem ersten Aspekt. Umgekehrt ergeben sich weitere Aspekte des Verfahrens nach dem ersten Aspekt und des Computerprogramms nach dem dritten Aspekt aus Ausführungsformen des MINFLUX-Mikroskops nach dem zweiten Aspekt.

Vorteilhafte Weiterbildungen der Erfindung ergeben sich aus den Patentansprüchen, der Beschreibung und den Zeichnungen und den zugehörigen Erläuterungen zu den Zeichnungen. Die beschriebenen Vorteile von Merkmalen und / oder Merkmalskombinationen der Erfindung sind lediglich beispielhaft und können alternativ oder kumulativ zur Wirkung kommen.

Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

Im Folgenden werden Ausführungsbeispiele der Erfindung anhand der Figuren beschrieben. Diese beschränken nicht den Gegenstand dieser Offenbarung und den Schutzumfang.

**Kurzbeschreibung der Figuren**

Fig. 1      zeigt eine erste Ausführungsform eines erfindungsgemäßen MINFLUX-Mikroskops;

Fig. 2      zeigt eine zweite Ausführungsform eines erfindungsgemäßen MINFLUX-Mikroskops;

Fig. 3      zeigt einen Strahlscanner für ein erfindungsgemäßes MINFLUX-Mikroskop nach einem ersten Ausführungsbeispiel;

Fig. 4      zeigt einen Strahlscanner für ein erfindungsgemäßes MINFLUX-Mikroskop nach einem zweiten Ausführungsbeispiel;

Fig. 5      zeigt eine schleifenförmige Bahn der Intensitätsverteilung des Beleuchtungslichts gemäß einem ersten Ausführungsbeispiel;

Fig. 6      zeigt eine schleifenförmige Bahn der Intensitätsverteilung des Beleuchtungslichts gemäß einem zweiten Ausführungsbeispiel;

Fig. 7  zeigt eine schleifenförmige Bahn der Intensitätsverteilung des Beleuchtungslichts gemäß einem dritten Ausführungsbeispiel;

Fig. 8  zeigt eine schleifenförmige Bahn der Intensitätsverteilung des Beleuchtungslichts gemäß einem vierten Ausführungsbeispiel;

Fig. 9  zeigt eine Bahn der Intensitätsverteilung des Beleuchtungslichts in Form einer Lissajous-Figur gemäß einem fünften Ausführungsbeispiel;

Fig. 10  zeigt eine Bahn der Intensitätsverteilung des Beleuchtungslichts in Form einer Lissajous-Figur gemäß einem sechsten Ausführungsbeispiel;

Fig. 11  zeigt eine Bahn der Intensitätsverteilung des Beleuchtungslichts in Form einer Lissajous-Figur gemäß einem siebenten Ausführungsbeispiel;

Fig. 12  zeigt eine Bahn der Intensitätsverteilung des Beleuchtungslichts in Form einer Lissajous-Figur gemäß einem achten Ausführungsbeispiel;

Fig. 13  zeigt eine rosettenförmige Bahn der Intensitätsverteilung des Beleuchtungslichts gemäß einem neunten Ausführungsbeispiel;

Fig. 14  zeigt eine rosettenförmige Bahn der Intensitätsverteilung des Beleuchtungslichts gemäß einem zehnten Ausführungsbeispiel;

Fig. 15  zeigt eine rosettenförmige Bahn der Intensitätsverteilung des Beleuchtungslichts gemäß einem elften Ausführungsbeispiel;

Fig. 16  zeigt eine rosettenförmige Bahn der Intensitätsverteilung des Beleuchtungslichts gemäß einem zwölften Ausführungsbeispiel;

Fig. 17  zeigt eine rosettenförmige Bahn der Intensitätsverteilung des Beleuchtungslichts gemäß einem dreizehnten Ausführungsbeispiel;

Fig. 18  zeigt eine rosettenförmige Bahn der Intensitätsverteilung des Beleuchtungslichts gemäß einem vierzehnten Ausführungsbeispiel;

Fig. 19  zeigt eine rosettenförmige Bahn der Intensitätsverteilung des Beleuchtungslichts gemäß einem fünfzehnten Ausführungsbeispiel;

## Beschreibung der Figuren

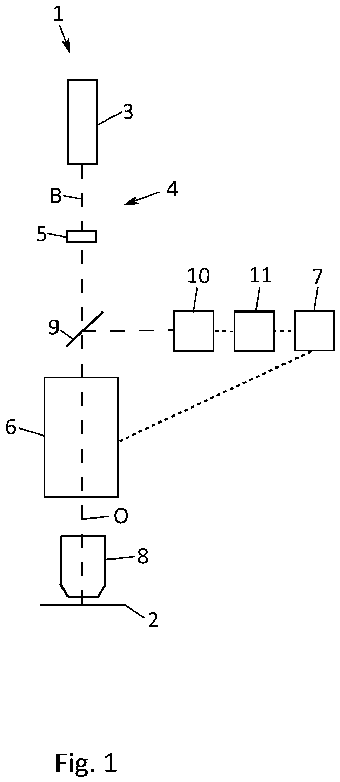

**Fig. 1** zeigt ein erstes Ausführungsbeispiel eines erfindungsgemäßen MINFLUX-Mikroskops 1 mit einer Lichtquelle 3, insbesondere einem Laser, der einen Beleuchtungslichtstrahl B erzeugt, wobei der Beleuchtungslichtstrahl B insbesondere ein Anregungslichtstrahl ist, der Emitter E in einer Probe 2 zur Lichtemission, insbesondere Lumineszenzemission, weiter insbesondere Fluoreszenzemission, anregt.

Der Beleuchtungslichtstrahl B durchläuft eine Beleuchtungsoptik 4, die einen Lichtmodulator 5, z.B. einen Phasenfilter oder einen räumlichen Lichtmodulator mit ansteuerbaren Pixeln, aufweist. Der Lichtmodulator 5 moduliert insbesondere die Phase des Beleuchtungslichtstrahls B so, dass am Fokus in der Probe 2 durch Interferenz eine Intensitätsverteilung des Beleuchtungslichts mit einem zentralen, d.h. auf einer optischen Achse O des Beleuchtungslichtstrahls B gelegenen, Intensitätsminimum, gebildet wird.

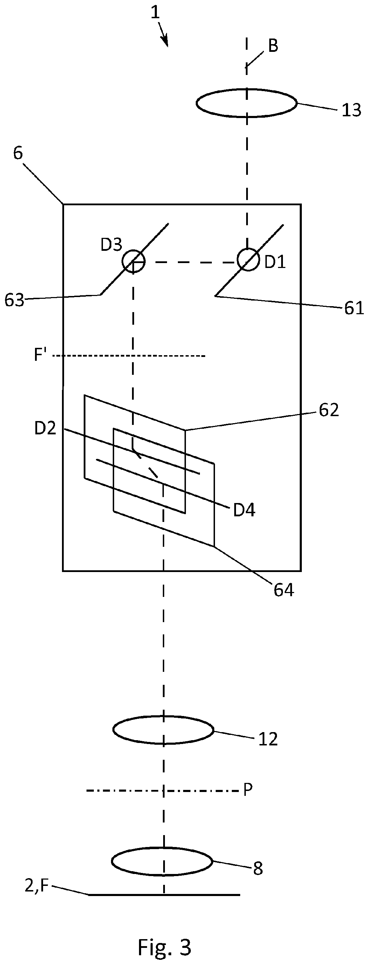

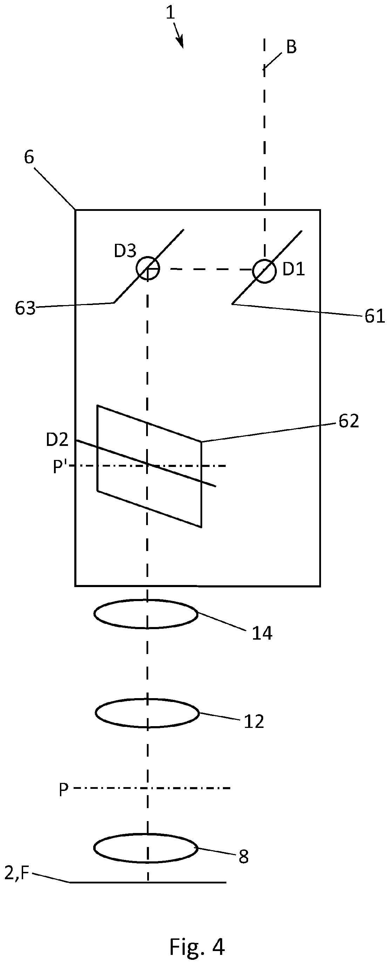

Über einen Strahlteiler 9, der das Beleuchtungslicht von dem von der Probe 2 ausgehenden Emissionslicht trennt, gelang der Beleuchtungslichtstrahl B zu einem Strahlscanner 6 mit mindestens einer optischen Komponente 61,62,63,64 (siehe **Fig. 3** und **Fig. 4),** der den Beleuchtungslichtstrahl B relativ zu der Probe 2 verlagert. Der Strahlscanner 6 ist insbesondere als mechanischer Scanner, z.B. als Galvanometerscanner, ausgebildet.

Eine Steuereinheit 7 ist mit dem Strahlscanner 6 verbunden und stellt dem Strahlscanner 6 Ansteuersignale zur Verfügung, die Zustände der mindestens einen optischen Komponente 61,62,63,64 festlegen, um die Intensitätsverteilung in der Probe 2 an eine gewünschte Position zu verlagern.

Anschließend wird der Beleuchtungslichtstrahl B von einem Objektiv 8 in die Probe 2 fokussiert, um die Intensitätsverteilung des Beleuchtungslichts mit dem zentralen Minimum zu bilden.

Von dem Beleuchtungslicht angeregte Emitter in der Probe 2 emittieren Emissionslicht, insbesondere Fluoreszenzlicht, das von dem Objektiv 8 zu einem Emissionslichtstrahl gesammelt und von dem Strahlscanner 6 entscannt wird. Anschließend wird der Emissionslichtstrahl an dem Strahlteiler 9 in einen Detektionsstrahlengang reflektiert, wo eine Messvorrichtung 10, insbesondere ein Punktdetektor wie ein APD oder ein ortsauflösender Detektor wie ein APD-Array, angeordnet ist.

Die Messvorrichtung 10 detektiert und registriert insbesondere von dem Emitter E in der Probe 2 ausgesendete Photonen und bestimmt eine Photonenrate.

Die Messvorrichtung 10 ist mit einer Recheneinheit 11 gekoppelt, welche die Emissionen, insbesondere die Photonenrate einer Abtastposition 21 in der Probe 2 zuordnet, an der das zentrale Minimum der Intensitätsverteilung des Beleuchtungslichts für einen jeweiligen Messzeitraum positioniert war und berechnet mit einem Positionsschätzalgorithmus eine geschätzte Position des Emitters E in der Probe 2 aus den Emissionen und den zugeordneten Abtastpositionen 21.

Erfindungsgemäß verlagert der Strahlscanner 6 die Intensitätsverteilung in einem Messzyklus entlang einer Bahn 20, also einer kontinuierlichen Kurve in der Probe 2.

Dazu stellt die Steuereinheit 7 Ansteuersignale zur Verfügung, die als Funktion der Zeit jeweils durch eine Sinusfunktion oder durch eine gewichtete Summe von Sinusfunktionen mit endlich vielen Summanden beschrieben werden können. Dies gilt insbesondere nicht nur für die Ansteuersignale sondern auch für Sollbewegungen der mindestens einen optischen Komponente 61,62,63,64 des Strahlscanners 6.

Die Parameter der Ansteuersignale sind so gewählt, dass die Intensitätsverteilung sowohl an Abtastpositionen 21 in einem Außenbereich 23 eines Nahbereichs 22 des Emitters E als auch an Abtastpositionen 21 in einem Innenbereich 24 des Nahbereichs 22 des Emitters E entlang der Bahn 20 verlagert wird, wobei die Abtastpositionen 21 in mindestens zwei Raumrichtungen x,y um eine vermutete Position des Emitters E in der Probe 2 herum gelegen sind.

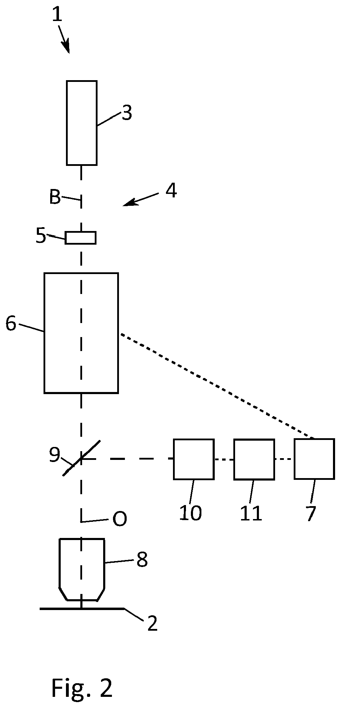

**Fig. 2** zeigt ein zweites Ausführungsbeispiel eines erfindungsgemäßen MINFLUX-Mikroskops 1. Bei diesem ist der Strahlscanner 6 im Beleuchtungsstrahlengang zwischen der Lichtquelle 3 und dem Strahlteiler 9 angeordnet, so dass der Strahlscanner 6 das von der Probe 2 ausgehende Emissionslicht nicht entscannt (sogenannter *non-descanned*-Aufbau). Hier kann der Strahlscanner 6 z.B. auch ein elektrooptischer Deflektor sein, der mit Ansteuersignalen beaufschlagt wird, die durch Sinusfunktionen oder gewichtete Summen von Sinusfunktionen beschrieben werden können. Abgesehen von der Position des Strahlscanners 6 im Strahlengang sind die Komponenten und Funktionen des MINFLUX-Mikroskops identisch mit den in **Fig. 1** gezeigten und oben beschriebenen Komponenten und Funktionen. Gleiche Komponenten sind dabei mit identischen Bezugszeichen markiert.

**Fig. 3** zeigt ein erstes Ausführungsbeispiel eines Strahlscanners 6 für ein MINFLUX-Mikroskop 1 gemäß der Erfindung, eine unter der Bezeichnung Quad-Scanner bekannte Form eines Galvanometerscanners mit vier optischen Komponenten 61,62,63,64, die als jeweils mit einem Galvoantrieb gekoppelte drehbare Spiegel ausgebildet sind. Die optischen Komponenten sind von dem jeweiligen Galvoantrieb getrieben jeweils um Drehachsen D1,D2,D3,D4 drehbar. Die erste Drehachse D1 der ersten optischen Komponente 61 und die dritte Drehachse D3 der dritten optische Komponente 63 sind parallel zueinander und die zweite Drehachse 62 der zweiten optischen Komponente 62 und die vierte Drehachse 64 der vierten optischen Komponente 64 sind ebenfalls parallel zueinander. Die erste optische Komponente 61 und die dritte optische Komponente 63 lenken den Beleuchtungslichtstrahl B gemeinsam in einer ersten Raumrichtung x relativ zu der Probe 2 ab und die zweite optische Komponente 62 und die vierte optische Komponente 64 lenken den Beleuchtungslichtstrahl B gemeinsam in einer zweiten Raumrichtung y relativ zu der Probe 2 ab. Der Beleuchtungslichtstrahl B wird in dem in **Fig. 3** gezeigten Beispiel nacheinander von der ersten optischen Komponente 61, der dritten optischen Komponente 63, der zweiten optischen Komponente 62 und der vierten optischen Komponente 64 abgelenkt. Dies ist jedoch nur eine von vielen möglichen Konfigurationen.

Zwischen der dritten optischen Komponente 63 und der zweiten optischen Komponente 62 befindet sich eine Bildebene F', die zu einer Fokusebene F in der Probe 2 konjugiert ist. Mit anderen Worten: Die Objektivlinse 8 und eine Tubuslinse 12 bilden ein optisches Relais, das die Fokusebene F in die Bildebene F' innerhalb des Strahlscanners 6 abbildet. Eine Fokussierlinse 13 fokussiert den von der Lichtquelle 3 ausgehenden Beleuchtungslichtstrahl B in diese Bildebene F'.

Die erste optische Komponente 61 und die dritte optische Komponente 63 werden insbesondere so angesteuert, dass der Beleuchtungslichtstrahl B unabhängig von der Stellung der drehbaren Spiegel stets denselben Punkt in einer Pupille P (Rückapertur) der Objektivlinse 8 trifft. Unterschiedliche Auslenkungen führen dann nur zu einer Verkippung des Beleuchtungslichtstrahls B in der Pupille P, die durch die Fokussierung mittels der Objektivlinse 8 in einer lateralen Verlagerung des Fokus in der Probe 2 in der ersten Raumrichtung x führt. Dasselbe Prinzip gilt insbesondere auch für die Auslenkung in der zweiten Raumrichtung y.

Dies hat insbesondere für die MINFLUX-Mikroskopie den Vorteil, dass die Intensitätsverteilung des Beleuchtungslichts B in der Probe 2 unabhängig von ihrer lateralen Position konstant bleibt.

Wenn die optischen Komponenten so angesteuert werden sollen, dass der Beleuchtungslichtstrahl B für jede Auslenkung denselben Punkt in der Pupille P des Objektivs 8 trifft, werden die erste optische Komponente 61 und die dritte optische Komponente 63 insbesondere gemeinsam mit einem ersten Ansteuersignal angesteuert werden, das die Verlagerung der Intensitätsverteilung in der ersten Raumrichtung x festlegt, d.h. die erste optische Komponente 61 und die dritte optische Komponente 63 werden mit Sinusfunktionen derselben Frequenzen und Amplituden angesteuert. Dasselbe gilt insbesondere für die zweite optische Komponente 62 und die vierte optische Komponente 64 bezüglich der zweiten Raumrichtung y. Sie werden gemeinsam mit einem zweiten Ansteuersignal angesteuert, das sinusförmig ist oder als gewichtete Summe von Sinusfunktionen beschreibbar ist.

Insbesondere dann, wenn kleine Verschiebungen in der Pupille P tolerierbar sind, z.B. weil die resultierenden Verformungen der Intensitätsverteilung vernachlässigbar klein sind, oder weil sich die resultierenden Effekte auf den Positionsschätzer für die verschiedenen, insbesondere symmetrisch um ein Zentrum verteilten, Abtastpositionen 21 herausmitteln, kann auch nur die erste optische Komponente 61 oder nur die dritte optische Komponente 63 mit dem erfindungsgemäßen sinusförmigen oder als gewichtete Summe von Sinusfunktionen darstellbaren Ansteuersignal beaufschlagt werden, um die Auslenkung der Intensitätsverteilung in der ersten Raumrichtung x zu erreichen, während die andere optische Komponente 61 oder 63 ein Ruhe gehalten wird oder eine definierte Bewegung (insbesondere geringerer Frequenz und/oder Amplitude) ausführt. Dies gilt analog für die Ansteuerung der zweiten optischen Komponente 62 oder der vierten optischen Komponente 64.

In den zuletzt beschriebenen Fällen ist es bei Verwendung der in **Fig. 3** gezeigten Konfiguration günstig, jeweils nur die erste optische Komponente 61 und die vierte optische Komponente 64 mit dem erfindungsgemäßen Verfahren anzusteuern, da diese optischen Komponenten am weitesten von der Bildebene F' entfernt sind, und somit dieselbe Bewegungsamplitude der Intensitätsverteilung in der Probe 2 mit einer geringeren Amplitude der Drehung der optischen Komponenten um die jeweiligen Drehachsen (einem geringeren Hub) erreicht werden kann.

**Fig. 4** zeigt ein weiteres Beispiel eines Strahlscanners 6 für das erfindungsgemäße MINFLUX-Mikroskop 1, eine als Tandem-Scanner, Pupillenscanner oder x2y-Scanner bezeichnete Variante eines Galvanometer-Scanners.

Der Strahlscanner 6 weist eine um eine erste Drehachse D1 drehbare erste optische Komponente 61, eine um eine zweite Drehachse D2 drehbare zweite optische Komponente 62 und eine um eine dritte Drehachse D3 drehbare dritte optische Komponente 63 auf, die jeweils als mit einem Galvanometer-Antrieb gekoppelte Spiegel ausgebildet sind.

Der Beleuchtungslichtstrahl B wird nacheinander von der ersten optischen Komponente 61, der dritten optischen Komponente 62 und der zweiten optischen Komponente 62 abgelenkt. Es sind jedoch selbstverständlich auch andere Anordnungen möglich.

Die erste optische Komponente 61 und die dritte optische Komponente 63 lenken den Beleuchtungslichtstrahl B gemeinsam in einer ersten Raumrichtung x ab und die zweite optische Komponente lenkt den Beleuchtungslichtstrahl B in einer zweiten Raumrichtung y ab.

Bei dem in **Fig. 4** dargestellten Strahlscanner 6 ist die zweite optische Komponente 62 in einer Pupillenebene P' angeordnet. Dies wird durch eine Abbildung der Pupille P (Rückapertur) der Objektivlinse 8 durch die Tubuslinse 12 und eine Scanlinse 14 realisiert.

Gemäß einer Variante des in **Fig. 4** gezeigten Strahlscanners 6 ist die zweite optische Komponente 62, die den Beleuchtungslichtstrahl B in der zweiten Raumrichtung y ablenkt, ein drehbarer Spiegel eines resonanten mechanischen Scanners, während die erste optische Komponente 61 und die dritte optische Komponente an Galvomotoren gekoppelte Drehspiegel sind. In diesem Fall wird die zweite optische Komponente 62 insbesondere mit dem Ansteuersignal mit der größten Frequenz beaufschlagt.

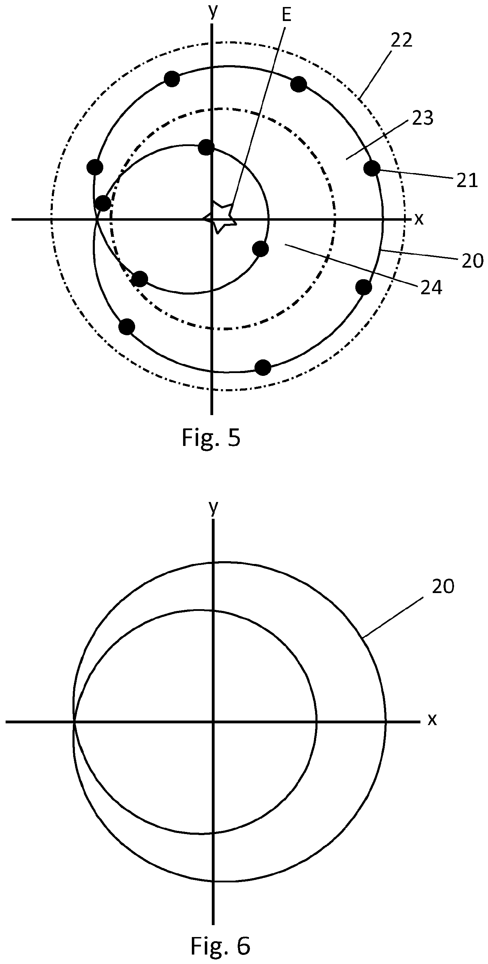

**Fig. 5** zeigt schematisch ein Beispiel des erfindungsgemäßen Verfahrens, bei dem durch Ansteuerung des Strahlscanners 6 eine Intensitätsverteilung des Beleuchtungslichts mit einem zentralen Minimum auf einer Bahn 20 in der Probe 2 in einem Nahbereich 22 einer vermuteten Position eines Emitters E verlagert wird.

Die Bahn 20 ist hier eine Pascal'sche Schnecke, eine Unterform der in der vorliegenden Anmeldung als Schleife bezeichneten Bahn 20, die durch ein erstes Ansteuersignal für eine oder mehrere die Intensitätsverteilung in x-Richtung verlagernde optische Komponenten 61,63 der Form $x = A_1 \cos(\omega_1 t) + A_2 \cos(\omega_2 t)$ und ein zweites Ansteuersignal für eine oder mehrere die Intensitätsverteilung in y-Richtung verlagernde optische Komponenten 62,64 der Form $y = A_1 \sin(\omega_1 t) + A_2 \sin(\omega_2 t)$ erhalten werden kann. In dem konkreten dargestellten Beispiel gelten die Bedingungen $\omega_1 = 2\omega_2$ und $A_2 = 2A_1$.

Entlang der Bahn 20 sind in regelmäßigen Abständen Abtastpositionen 21 dargestellt, denen in einem bestimmten Messzeitraum von der Messvorrichtung 10 erfasste Emissionen des Emitters E zugeordnet werden, um den Emitter E zu lokalisieren. Selbstverständlich können auch wesentlich mehr Abtastpositionen 21 vorgesehen sein, die dichter aneinander auf der Bahn 20 angeordnet sind.

Weiterhin ist in **Fig. 5** ein kreisförmiger Innenbereich 24 des Nahbereichs 22 und ein kreisringförmiger, um den Innenbereich 24 herum angeordneter Außenbereich 23 des Nahbereichs 22 dargestellt.

Es ist aus **Fig. 5** ersichtlich, dass Abtastpositionen 21 näherungsweise auf zwei ineinander liegenden Kreisen angeordnet sind, sodass die Abtastpositionen 21 sowohl in dem Außenbereich 23 als auch in dem Innenbereich 24 des Nahbereichs 22 liegen und dass die Menge der Abtastpositionen 21 in den zwei Raumrichtungen x,y um die erwartete Position des Emitters E herum angeordnet sind.

**Fig. 6** zeigt eine weitere Bahn 20, die zur Kategorie der Pascal'schen Schnecken gehört. Die Bahn 20 kann ebenfalls durch ein erstes Ansteuersignal der Form $x = A_1 \cos(\omega_1 t) + A_2 \cos(\omega_2 t)$ und ein zweites Ansteuersignal der Form $y = A_1 \sin(\omega_1 t) + A_2 \sin(\omega_2 t)$ erzeugt werden, hier mit den Bedingungen $\omega_1 = 2\omega_2$ und $A_2 = 4A_1$. Wie bei der in **Fig. 5** gezeigten Bahn 20 liegen die Abtastpositionen 21 (in **Fig. 6** zur besseren Übersicht nicht gezeigt) näherungsweise auf zwei ineinander liegenden Kreisen. Durch das größere Amplitudenverhältnis wird eine innere, näherungsweise kreisförmige, Teilbahn mit größerem Radius im Vergleich zu der in **Fig. 5** gezeigten Bahn 20 erreicht. Aus diesem Vergleich ist ersichtlich, dass durch Anpassung des Amplitudenverhältnisses gezielt Innenbereiche 24 verschiedener Größen mit der Intensitätsverteilung abgetastet werden können. Bei der in **Fig. 5** gezeigten Bahn 20 liegen aufgrund des kleineren näherungsweisen Innenkreises Abtastpunkte 21 näher an einem Zentrum der Bahn 20, was z.B. für eine Hintergrundkorrektur bei der Positionsbestimmung vorteilhaft sein kann, wenn das Zentrum der vorab geschätzten Emitterposition entspricht. Durch ein noch kleineres Amplitudenverhältnis, z.B. $A_2 = 1{,}5A_1$ kann eine Bahn 20 mit noch näher an dem Zentrum liegenden Abtastpunkten 21 erzeugt werden (nicht gezeigt).

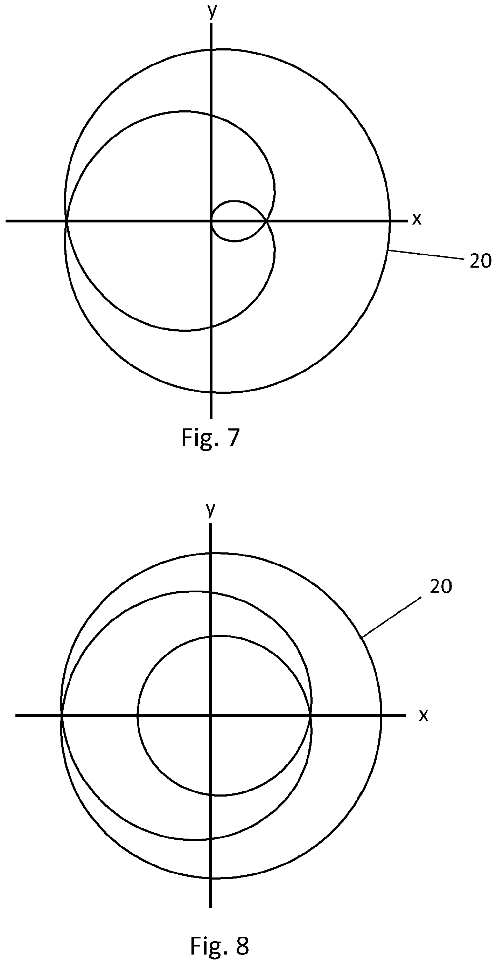

Die **Figuren 6 und 7** zeigen Schleifen, die nicht zu den Pascal'schen Schnecken gehören, und die jeweils drei näherungsweise kreisförmige Abschnitte aufweisen (sogenannte Dreifachschleifen). Diese können durch ein erstes Ansteuersignal der Form $x = A_1 \cos(\omega_1 t) + A_2 \cos(\omega_2 t)$ und ein zweites Ansteuersignal der Form $y = A_1 \sin(\omega_1 t) + A_2 \sin(\omega_2 t)$ erzeugt werden. Das Frequenzverhältnis beträgt jeweils $\omega_1 = 3/2\,\omega_2$. Bei der in **Fig. 7** gezeigten Bahn 20 sind alle vier Amplituden gleich groß. Um die in **Fig. 8** dargestellte Bahn 20 zu erzeugen, wird das Amplitudenverhältnis $A_2/A_1$ für beide Ansteuersignale (x- und y-Richtung) auf den Wert 2,5 eingestellt. Beide Bahnen 20 bestehen näherungsweise aus drei ineinander liegenden Kreisen, von denen zumindest Abtastpositionen 21 auf dem innersten Kreis in dem Innenbereich 24 liegen und von denen zumindest Abtastpositionen 21 auf dem äußersten Kreis in dem Außenbereich 23 liegen. Der innerste der drei näherungsweisen Kreise liegt bei der Bahn 20 gemäß **Fig. 7** in der Nähe eines Zentrums der Bahn 20, das insbesondere an einer vermuteten Emitterposition E angeordnet wird. Dies hat insbesondere Vorteile bei einer Hintergrundkorrektur im Zuge der Positionsbestimmung. Beispielsweise kann eine zentrale Abtastposition 21 als Kontrolle für eine Hintergrundkorrektur verwendet werden, da die Signalintensität über dem Hintergrund je geringer ist, je näher eine Abtastposition 21 an der tatsächlichen Emitterposition liegt.

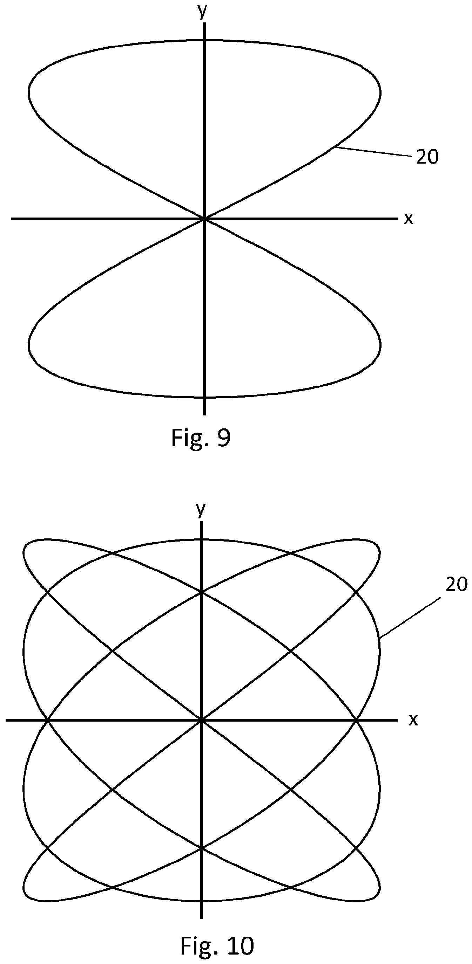

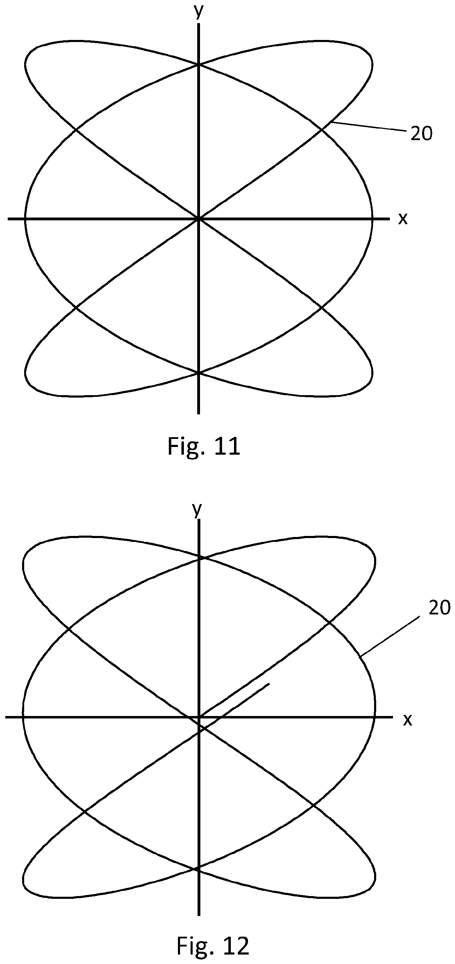

In den **Figuren 9, 10, 11 und 12** sind weitere erfindungsgemäße Bahnen 20, nämlich Lissajous-Figuren abgebildet. Solche Bahnen 20 lassen sich durch erste Ansteuersignale der Form $x = A_x (\sin \omega_1 t)$ und zweite Ansteuersignale der Form $y = A_y (\sin \omega_2 t)$ erzeugen. Bei der in **Fig. 9** gezeigten Bahn 20 gilt $\omega_1 = 2\omega_2$ und $A_x = A_y$. Die Parameter der in **Fig. 10** dargestellten Bahn 20 sind $\omega_1 = 4/3\omega_2$ und $A_x = A_y$ und die Parameter der in **Fig. 11** gezeigten Bahn sind $\omega_1 = 3/2\omega_2$ und $A_x = A_y$. Bei den Bahnen 20 nach **Fig. 9** bis **Fig. 11** stehen die Frequenzen also jeweils im Verhältnis einer rationalen Zahl. Dies hat zur Folge, dass die entsprechenden Lissajous-Figuren geschlossen sind, also bei mehreren Umläufen stets dieselbe Figur abgefahren wird.

Bei der in **Fig. 12** gezeigten Bahn 20 wurde dagegen das Frequenzverhältnis 3,02/2 gewählt ($\omega_1 = 3{,}02/2\omega_2$ und $A_x = A_y$). Dies ergibt eine nicht geschlossene Bahn 20.

Geschlossene Bahnen 20, wie die in **Fig. 5** bis **Fig. 11** dargestellten Bahnen 20 sind in vielen Anwendungsfällen des erfindungsgemäßen Verfahrens vorteilhaft, insbesondere da für jeden Umlauf der Bahn 20 konstante Abtastpositionen 21 vorgegeben werden können, was insbesondere den Rechenaufwand bei der Positionsbestimmung verringert. In manchen Fällen können jedoch auch Bahnen 20, die sich bei jedem Durchlauf verschieben (z.B. die in **Fig. 12** gezeigte Bahn 20) Vorteile haben. Z.B. könnte ein Messzyklus mit mehreren Umläufen, bei denen sich die Bahn 20 jeweils in einer Umfangsrichtung verschiebt, verwendet werden, um die Probe 2 besonders dicht abzutasten.

Die in den **Figuren 9 bis 11** gezeigten geschlossenen Lissajous-Bahnen 20 haben den Vorteil, dass die Abtastpositionen 21 (siehe **Fig. 5,** zur besseren Übersicht hier nicht gezeigt) jeweils sowohl in einem Außenbereich 23 als auch in einem Innenbereich 2 des Nahbereichs 22 des Emitters E angeordnet sind, wobei die Bahnen 20 jeweils ein Zentrum am Koordinatenursprung aufweisen, das von der Bahn 20 überstrichen wird. Die Lage der Bahn 20 in der Probe 2 kann insbesondere so festgelegt werden, dass dieser Koordinatenursprung an einer vorab geschätzten Position des Emitters E liegt. Eine Menge von Abtastpositionen 21, die auf der Bahn 20 liegen, ist somit in zwei Raumrichtungen um das Zentrum herum angeordnet und die Abtastpositionen 21 können symmetrisch um das Zentrum gelegt werden, was eine Positionsbestimmung erlaubt, die von der tatsächlichen Emitterposition weitgehend unabhängig ist.

Am Zentrum, d.h. am Koordinatenursprung kann sich eine weitere Abtastposition 21 befinden, die entweder für die Positionsbestimmung oder zur Ermittlung eines Kontrollwerts für die Hintergrundkorrektur verwendet werden kann.

Die **Figuren 12 bis 17** zeigen weitere erfindungsgemäße Bahnen 20, nämlich sogenannte Rosetten oder Kleeblattkurven.

Solche Bahnen 20 können durch erste Ansteuersignale der Form $x = A_1^x \cos(\omega_1^x t + \varphi_1^x) + A_2^x \cos(\omega_2^x t + \varphi_2^x)$ und zweite Ansteuersignale der Form $y = A_1^y \sin(\omega_1^y t + \varphi_1^y) - A_2^y \sin(\omega_2^y t + \varphi_2^y)$

erzeugt werden.

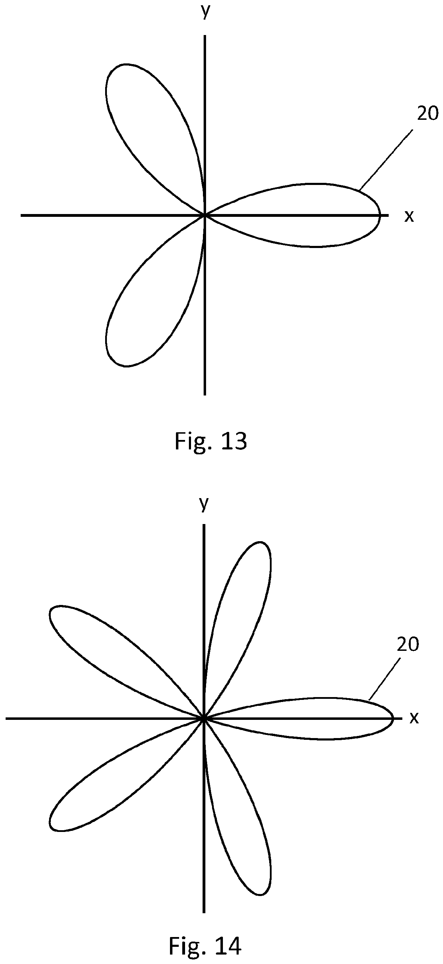

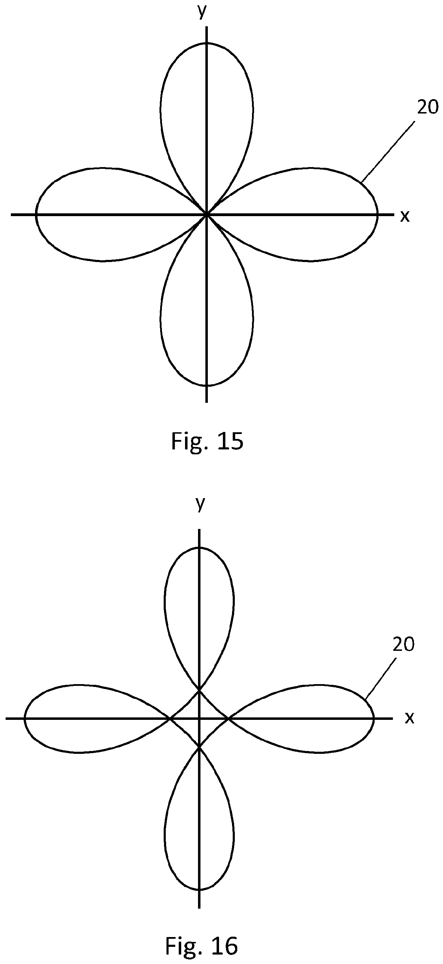

Bei der Bahn 20 gemäß **Fig. 13** betragen Frequenzverhältnisse $\omega_1^x/\omega_2^x$ und $\omega_1^y/\omega_2^y$ jeweils 2/1, und bei der Bahn 20 gemäß **Fig. 14** sind die Frequenzverhältnisse jeweils 3/2. Alle vier Amplituden sind bei diesen Bahnen 20 identisch. Die Rosette nach **Fig. 13** hat drei Blätter, die Rosette gemäß **Fig. 14** weist fünf Blätter auf. Mit einer höheren Anzahl von Blättern kann insgesamt eine dichtere und homogenere Verteilung der Abtastpositionen 21 (siehe **Fig. 5**) in der Probe 2 erreicht werden. Die Bahnen 20 durchlaufen jeweils ein Zentrum am Koordinatenursprung, was die oben im Kontext der Lissajous-Figuren erläuterten Vorteile hat. Die **Figuren 15 und 16** zeigen Rosetten mit vier Blättern, die durch Frequenzverhältnisse $\omega_1^x/\omega_2^x$ und $\omega_1^y/\omega_2^y$ von jeweils 3/1 erzeugt werden können. Bei der in **Fig. 15** gezeigten Bahn 20 sind alle vier Amplituden identisch, die in **Fig. 16** dargestellte Bahn ergibt sich durch die Parameter

$$A_2^x = 0{,}8A_1^x \quad \text{und} \quad A_2^y = 0{,}8A_1^y$$

, also durch unterschiedliche Amplituden der Summanden innerhalb eines Ansteuersignals. Hierdurch geht die in **Fig. 16** dargestellte rosettenförmige Bahn nicht mehr durch das Zentrum am Koordinatenursprung, sondern umläuft dieses, so dass Abtastpositionen 21 auf zwei konzentrischen Kreisen symmetrisch um das Zentrum angeordnet werden können.

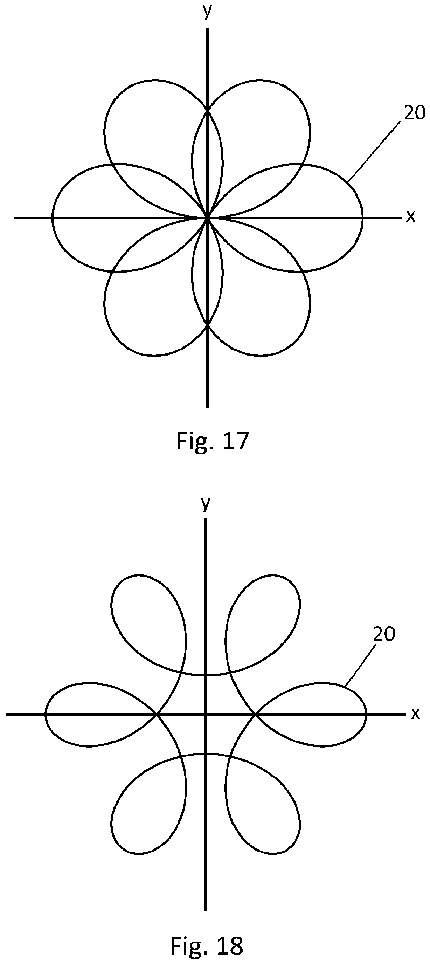

Wie aus den **Figuren 17 und 18** ersichtlich ist, ergibt sich ein ähnlicher Effekt für eine sechsblättrige Rosette, die durch Ansteuersignale mit Frequenzverhältnissen $\omega_1^x/\omega_2^x$ und $\omega_1^y/\omega_2^y$ von jeweils 5/1 erzeugt werden können, wobei für **Fig. 17** vier identische Amplituden gewählt wurden, und für die Bahn 20 nach **Fig. 18** die Gleichungen

$$A_2^x = 0{,}6A_1^x \quad \text{und} \quad A_2^y = 0{,}6A_1^y$$

gelten.

Die in **Fig. 18** gezeigte Bahn 20 ist besonders vorteilhaft, da hier Abtastpositionen 21 auf der Bahn 20 festgelegt werden können, die zwei um den Koordinatenursprung konzentrische Sechsecke unterschiedlicher Größe bilden. Somit können zwei sechseckförmige Muster von Abtastposition 21 unterschiedlicher Größe realisiert werden, wie sie im Stand der Technik (durch schrittweises Abtasten mit elektrooptischen Deflektoren) verwendet werden, und zwar innerhalb einer einzigen Bahn 20. Damit können beispielsweise aus dem Stand der Technik bekannte iterative MINFLUX-Verfahren, bei denen in zwei aufeinanderfolgenden Iterationen der Radius des Abtastmusters reduziert wird, in einer einzigen kontinuierlichen Bahn 20 realisiert werden. Diese Abtastpositionen 21 haben dann eine hohe Drehsymmetrie und weisen eine gute Annäherung an zwei konzentrische Kreise auf.

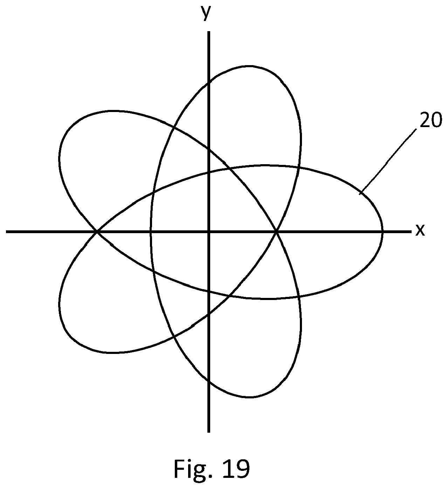

Schließlich ist in **Fig. 19** eine rosettenförmige Bahn 20 gezeigt, die durch Ansteuersignale mit Frequenzverhältnissen $\omega_1^x/\omega_2^x$ und $\omega_1^y/\omega_2^y$ von jeweils 3/2 erzeugt werden kann, wobei die Amplituden $A_1^x$ und $A_1^y$ sowie $A_2^x$ und $A_2^y$ gleich sind und die Amplituden $A_1^x$ und $A_2^x$ sowie $A_1^y$ und $A_2^y$ jeweils in einem Verhältnis von 2/1 stehen. Dies ergibt eine Rosette mit fünf Blättern, bei der das Zentrum am Koordinatenursprung umlaufen wird und sich ähnlich wie bei der in **Fig. 18** gezeigten Bahn 20 Abtastpositionen 21 auf Kreisen mit mehreren Radien rotationssymmetrisch um das Zentrum anordnen lassen, so dass insbesondere mehrere Schritte eines iterativen MINFLUX-Verfahrens mit einer Bahn 20 realisiert werden können.

**Bezugszeichenliste**

1 MINFLUX-Mikroskop
2 Probe
3 Lichtquelle
4 Beleuchtungsoptik
5 Lichtmodulator
6 Strahlscanner
7 Steuereinheit
8 Objektiv/Objektivlinse
9 Strahlteiler
10 Messvorrichtung
11 Recheneinheit
12 Tubuslinse

| 13 | Fokussierlinse |
|----|----|
| 14 | Scanlinse |
| 20 | Bahn |
| 21 | Abtastposition |
| 22 | Nahbereich |
| 23 | Außenbereich |
| 24 | Innenbereich |
| 61 | Erste optische Komponente |
| 62 | Zweite optische Komponente |
| 63 | Dritte optische Komponente |
| 64 | Vierte optische Komponente |
| B | Beleuchtungslichtstrahl |
| D1 | Erste Drehachse |
| D2 | Zweite Drehachse |
| D3 | Dritte Drehachse |
| D4 | Vierte Drehachse |
| E | Emitter |
| F | Fokusebene |
| F' | Bildebene |
| O | Optische Achse |
| P | Pupille |
| P' | Pupillenebene |

**Patentansprüche**

1. Verfahren für die Lokalisierung oder für das Verfolgen eines Emitters (E) mittels eines MINFLUX-Verfahrens oder eines STED-MINFLUX-Verfahrens in einer Probe (2),

   - wobei die Probe (2) in einem Nahbereich (22) des Emitters (E) durch einen Beleuchtungslichtstrahl (B) mit einer Intensitätsverteilung von Beleuchtungslicht beleuchtet wird, die ein zentrales Minimum aufweist, wobei das Beleuchtungslicht Anregungslicht oder Emissionsunterdrückungslicht, insbesondere STED-Licht, ist, und wobei das Beleuchtungslicht oder ein anderes Licht den Emitter (E) zur Emission von Licht anregt,
   - wobei die Intensitätsverteilung in einem Messzyklus mittels eines Strahlscanners (6) mit mindestens einer den Beleuchtungslichtstrahl (B) verlagernden optischen Komponente (61,62,63,64) an Abtastpositionen (21) verlagert wird, und wobei zu den Abtastpositionen (21) Emissionen des Emitters (E) erfasst und den Abtastpositionen (21) zugeordnet werden,

   **dadurch gekennzeichnet, dass**
   der Strahlscanner (6) mit Ansteuersignalen gesteuert wird, um die Intensitätsverteilung in dem Messzyklus entlang einer Bahn (20) zu verlagern, wobei die Intensitätsverteilung sowohl an Abtastpositionen (21) in einem Außenbereich (23) des Nahbereichs (22) des Emitters (E) als auch an Abtastpositionen (21) in einem Innenbereich (24) des Nahbereichs (22) des Emitters (E) entlang der Bahn (20) verlagert wird, wobei die Abtastpositionen (21) in mindestens zwei Raumrichtungen (x, y) um eine vermutete Position des Emitters (E) in der Probe (2) herum gelegen sind, und wobei die Ansteuersignale und/oder Sollbewegungen der mindestens einen optischen Komponente (61,62,63,64) als Funktion der Zeit jeweils durch eine Sinusfunktion oder durch eine gewichtete Summe von Sinusfunktionen mit endlich vielen Summanden beschrieben werden können.

2. Verfahren nach Anspruch 1, **dadurch gekennzeichnet, dass** die Ansteuersignale und/oder die Sollbewegungen der mindestens einen optischen Komponente (61,62,63,64) als Funktion der Zeit jeweils durch eine Sinusfunktion oder eine gewichtete Summe von zehn Sinusfunktionen oder weniger, insbesondere durch eine Sinusfunktion oder eine gewichtete Summe von vier Sinusfunktionen oder weniger, weiter insbesondere durch eine Sinusfunktion oder eine gewichtete Summe von zwei Sinusfunktionen, beschrieben werden können.

3. Verfahren nach Anspruch 1 oder 2, **dadurch gekennzeichnet, dass** der Strahlscanner (6) mit einem ersten Ansteuersignal und einem zweiten Ansteuersignal gesteuert wird, wobei das erste Ansteuersignal eine Verlagerung der Intensitätsverteilung entlang einer ersten Raumrichtung (x) bewirkt, und wobei das zweite Ansteuersignal eine Verlagerung der Intensitätsverteilung entlang einer zweiten Raumrichtung (y) bewirkt, wobei das erste Ansteuersignal und/oder eine erste Sollbewegung der mindestens einen optischen Komponente (61,62,63,64) und das zweite Ansteuersignal und/oder eine zweite Sollbewegung der mindestens einen optischen Komponente (61,62,63,64) als Funktion der Zeit jeweils durch eine Sinusfunktion oder durch eine gewichtete Summe von Sinusfunktionen mit endlich vielen Summanden beschrieben werden kann.

4. Verfahren nach Anspruch 3, **dadurch gekennzeichnet, dass** das erste Ansteuersignal und/oder die erste Sollbewegung durch die Funktion $x = A_x \sin(\omega_1 t + \varphi_1)$ beschrieben werden kann, wobei das zweite Ansteuersignal und/oder die zweite Sollbewegung durch die Funktion $y = A_y \sin(\omega_2 t + \varphi_2)$ beschrieben werden kann, wobei $A_x$ eine Amplitude des ersten Ansteuersignals und/oder der ersten Sollbewegung bezeichnet, wobei $A_y$ eine Amplitude des zweiten Ansteuersignals und/oder der zweiten Sollbewegung bezeichnet, wobei $t$ die Zeit bezeichnet, wobei $\omega_1$ eine Frequenz des ersten Ansteuersignals und/oder der ersten Sollbewegung bezeichnet, wobei $\omega_2$ eine Frequenz des zweiten Ansteuersignals und/oder der zweiten Sollbewegung bezeichnet, wobei $\varphi_1$ eine Phase des ersten Ansteuersignals und/oder der ersten Sollbewegung bezeichnet, und wobei $\varphi_2$ eine zweite Phase des zweiten Ansteuersignals und/oder der zweiten Sollbewegung bezeichnet, wobei die Frequenz des ersten Ansteuersignals und/oder der ersten Sollbewegung ungleich der Frequenz des zweiten Ansteuersignals und/oder der zweiten Sollbewegung ist.

5. Verfahren nach Anspruch 3, **dadurch gekennzeichnet, dass** das erste Ansteuersignal und/oder die erste Sollbewegung durch die Funktion $x = A_1^x \sin(\omega_1^x t + \varphi_1^x) \mp A_2^x \sin(\omega_2^x t + \varphi_2^x)$ beschrieben werden kann, wobei das zweite Ansteuersignal und/oder die zweite Sollbewegung durch die Funktion $y = A_1^y \sin(\omega_1^y t + \varphi_1^y) \mp A_2^y \sin(\omega_2^y t + \varphi_2^y)$ beschrieben werden kann, wobei $A_1^x$ eine erste Amplitude des ersten Ansteuersignals und/oder der ersten Sollbewegung bezeichnet, wobei $A_2^x$ eine zweite Amplitude des ersten Ansteuersignals und/oder der ersten Sollbewegung bezeichnet, wobei $A_1^y$ eine erste Amplitude des zweiten Ansteuersignals und/oder der zweiten Sollbewegung bezeichnet, wobei $A_2^y$ eine zweite Amplitude des zweiten Ansteuersignals und/oder der zweiten Sollbewegung bezeichnet, wobei $t$ die Zeit bezeichnet, wobei $\omega_1^x$ eine erste Frequenz des ersten Ansteuersignals und/oder der ersten Sollbewegung bezeichnet, wobei $\omega_2^x$ eine zweite Frequenz des ersten Ansteuersignals und/oder der ersten Sollbewegung bezeichnet, wobei $\omega_1^y$ eine erste Frequenz des zweiten Ansteuersignals und/oder der zweiten Sollbewegung bezeichnet, wobei $\omega_2^y$ eine zweite Frequenz des zweiten Ansteuersignals und/oder der zweiten Sollbewegung bezeichnet, wobei cpi eine erste Phase des ersten Ansteuersignals und/oder der ersten Sollbewegung bezeichnet, wobei $\varphi_2^x$ eine zweite Phase des ersten Ansteuersignals und/oder der ersten Sollbewegung bezeichnet, wobei $\varphi_1^y$ eine erste Phase des zweiten Ansteuersignals und/oder der zweiten Sollbewegung bezeichnet, und wobei $\varphi_2^y$ eine zweite Phase des zweiten Ansteuersignals und/oder der zweiten Sollbewegung bezeichnet.

6. Verfahren nach Anspruch 4 oder 5, **dadurch gekennzeichnet, dass** ein Verhältnis zwischen der Frequenz des ersten Ansteuersignals und/oder der ersten Sollbewegung und der Frequenz des zweiten Ansteuersignals und/oder der zweiten Sollbewegung oder ein Verhältnis zwischen der ersten Frequenz und der zweiten Frequenz des ersten Ansteuersignals und/oder der ersten Sollbewegung und/oder ein Verhältnis zwischen der ersten Frequenz und der zweiten Frequenz des zweiten Ansteuersignals und/oder der zweiten Sollbewegung eine rationale Zahl ungleich 1 ist.

7. Verfahren nach einem der vorhergehenden Ansprüche, **dadurch gekennzeichnet, dass** die Intensitätsverteilung mittels Drehbewegungen der mindestens einen optischen Komponente (61,62,63,64) des Strahlscanners (6) um mindestens eine Drehachse (D1,D2,D3,D4) verlagert wird, insbesondere wobei die optische Komponente (61,62,63,64) ein Spiegel oder ein Prisma ist.

8.  Verfahren nach Anspruch 7, **dadurch gekennzeichnet, dass** der Strahlscanner (6) eine erste optische Komponente (61), die um eine erste Drehachse (D1) drehbar ist, und eine zweite optische Komponente (62), die um eine zweite Drehachse (D2) drehbar ist, aufweist, wobei die Intensitätsverteilung mittels einer ersten Drehbewegung der ersten optischen Komponente (61) um die erste Drehachse (D1) in einer ersten Raumrichtung (x) verlagert wird, und wobei die Intensitätsverteilung mittels einer zweiten Drehbewegung der zweiten optischen Komponente (62) um die zweite Drehachse (D2) in einer zweiten Raumrichtung (y), verlagert wird, so dass die Intensitätsverteilung durch eine Überlagerung der ersten Drehbewegung und der zweiten Drehbewegung auf der Bahn (20) verlagert wird, wobei erste Ansteuersignale und/oder erste Sollbewegungen der ersten optischen Komponente (61) und zweite Ansteuersignale und/oder zweite Sollbewegungen der zweiten optischen Komponente (62) jeweils durch Sinusfunktionen oder gewichtete Summen von Sinusfunktionen mit endlich vielen Summanden beschrieben werden können.

9.  Verfahren nach Anspruch 7, **dadurch gekennzeichnet, dass** der Strahlscanner (6) eine optische Komponente (61,62,63,64) aufweist, die um eine erste Drehachse (D1) und um eine zweite Drehachse (D2) drehbar ist, wobei die Intensitätsverteilung mittels einer ersten Drehbewegung der optischen Komponente (61,62,63,64) um die erste Drehachse (D1) in einer ersten Raumrichtung (x) verlagert wird und mittels einer zweiten Drehbewegung der optischen Komponente (61,62,63,64) um die zweite Drehachse (D2) in einer zweiten Raumrichtung (y) verlagert wird, so dass die Intensitätsverteilung durch eine Überlagerung der ersten Drehbewegung und der zweiten Drehbewegung auf der Bahn (20) verlagert wird, wobei die erste Drehbewegung steuernde erste Ansteuersignale und/oder erste Sollbewegungen der optischen Komponente (61,62,63,64) um die erste Drehachse (D1) und die zweite Drehbewegung steuernde zweite Ansteuersignale und/oder zweite Sollbewegungen der optischen Komponente (61,62,63,64) um die zweite Drehachse (D2) jeweils durch Sinusfunktionen oder gewichtete Summen von Sinusfunktionen mit endlich vielen Summanden beschrieben werden können.

10. Verfahren nach einem der vorhergehenden Ansprüche, **dadurch gekennzeichnet, dass** der Strahlscanner (6) mindestens zwei optische Komponenten (61,63) aufweist, die dazu ausgebildet sind, die Intensitätsverteilung in derselben Raumrichtung (x) in der Probe zu verlagern, wobei nur eine der mindestens zwei optischen Komponenten (61,63) mit den Ansteuersignalen gesteuert wird, um die Intensitätsverteilung in dem Messzyklus entlang der Bahn (20) zu verlagern, insbesondere wobei die mindestens eine übrige optische Komponente in Ruhe gehalten oder mit einem weiteren Ansteuersignal gesteuert wird.

11. Verfahren nach einem der vorhergehenden Ansprüche, **dadurch gekennzeichnet, dass** die Bahn (20) punkt- oder rotationssymmetrisch bezüglich einer erwarteten Position des Emitters (E) oder achsensymmetrisch bezüglich einer Geraden, auf der eine erwartete Position des Emitters (E) liegt, ist, und/oder dass zumindest eine Teilmenge der Abtastpositionen (21) zumindest näherungsweise rotationssymmetrisch um eine erwartete Position des Emitters (E) angeordnet ist.

12. Verfahren nach einem der vorhergehenden Ansprüche, **dadurch gekennzeichnet, dass** aus den den Abtastpositionen (21) zugeordneten Emissionen des Emitters (E) eine Position des Emitters (E) geschätzt wird.

13. Verfahren nach Anspruch 12, **dadurch gekennzeichnet, dass** nach dem Messzyklus ein weiterer Messzyklus durchgeführt wird, wobei die Bahn (20) für den weiteren Messzyklus relativ zu der Probe (2) auf Basis einer in dem vorhergehenden Messzyklus geschätzten Emitterposition verschoben und/oder skaliert wird, insbesondere wobei die Ansteuersignale für den weiteren Messzyklus auf Basis der in dem vorhergehenden Messzyklus geschätzten Emitterposition angepasst werden.

14. Verfahren nach Anspruch 13, **dadurch gekennzeichnet, dass** die Verschiebung der Bahn (20) relativ zu der Probe (2) und/oder eine Skalierung der Bahn (20) an einem vorbestimmten Punkt der Bahn (20) durchgeführt wird, insbesondere wobei der vorbestimmte Punkt so ausgewählt wird, dass eine minimale Beschleunigung und/oder ein minimaler Ruck der mindestens einen optischen Komponente (61,62,63,64) resultiert und/oder dass ein Relaxationsvorgang der mindestens einen optischen Komponente (61,62,63,64) optimiert ist.

15. MINFLUX-Mikroskop (1) für die Lokalisierung oder das Verfolgen eines Emitters (E) in einer Probe (2), insbesondere nach einem Verfahren gemäß einem der Ansprüche 1 bis 14, aufweisend

    - eine Lichtquelle (3), die dazu ausgebildet ist, einen Beleuchtungslichtstrahl (B) zu erzeugen,
    - eine Beleuchtungsoptik (4), die dazu ausgebildet ist, durch den Beleuchtungslichtstrahl (B) eine Probe (2) in einem Nahbereich (22) eines Emitters (E) mit einer Intensitätsverteilung von Beleuchtungslicht (B) mit einem zentralen Minimum zu beleuchten, wobei das Beleuchtungslicht Anregungslicht oder Emissionsunterdrückungslicht, insbesondere STED-Licht, ist, und wobei das Beleuchtungslicht oder ein anderes Licht den Emitter (E) zur Emission von Licht anregt,

- einen Strahlscanner (6) mit mindestens einer den Beleuchtungslichtstrahl (B) verlagernden optischen Komponente (61,62,63,64), wobei der Strahlscanner (6) dazu ausgebildet ist, die Intensitätsverteilung in einem Messzyklus an Abtastpositionen (21) zu verlagern, und

- eine Messvorrichtung (10), die dazu ausgebildet ist, zu den Abtastpositionen (21) Emissionen des Emitters (E) zu erfassen,

**dadurch gekennzeichnet, dass**

das MINFLUX-Mikroskop eine Steuereinheit (7) aufweist, die dazu ausgebildet ist, den Strahlscanner (6) mit Ansteuersignalen zu steuern, um die Intensitätsverteilung in dem Messzyklus entlang einer Bahn (20) zu verlagern, so dass die Intensitätsverteilung sowohl an Abtastpositionen (21) in einem Außenbereich (23) des Nahbereichs (22) des Emitters (E) als auch an Abtastpositionen (21) in einem Innenbereich (24) des Nahbereichs (22) des Emitters (E) entlang der Bahn (20) verlagert wird, wobei die Abtastpositionen (21) in mindestens zwei Raumrichtungen (x, y) um eine vermutete Position des Emitters (E) in der Probe (2) herum gelegen sind, und wobei die Ansteuersignale und/oder Sollbewegungen der mindestens einen optischen Komponente (61,62,63,64) als Funktion der Zeit jeweils durch eine Sinusfunktion oder durch eine gewichtete Summe von Sinusfunktionen mit endlich vielen Summanden beschrieben werden können.

16. Computerprogramm aufweisend Befehle, die bewirken, dass das MINFLUX-Mikroskop nach Anspruch 15 das Verfahren nach einem der Ansprüche 1 bis 14 ausführt.

Fig. 1

Fig. 2

1

B

13

6

D3

D1

63

61

F'

62

D2

D4

64

12

P

8

2,F

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Europäisches Patentamt
European Patent Office
Office européen des brevets

# EUROPÄISCHER RECHERCHENBERICHT

Nummer der Anmeldung

EP 23 16 3585

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2023/006176 A1 (MAX PLANCK GESELLSCHAFT [DE]) 2. Februar 2023 (2023-02-02) * Seite 3, Zeile 3 – Seite 4, Zeile 32; Seite 8, Zeilen 1-11; Seite 17, Zeilen 27-32; Seite 22, Zeile 4 – Seite 28 – Zeile 29; Ansprüche 10, 20; Abbildungen 1, 7 – 12 * ----- | 1-6, 10-16 | INV. G02B21/00 G01N21/64 |
| Y,D | DE 10 2016 117096 B4 (MAX PLANCK GESELLSCHAFT [DE]) 9. April 2020 (2020-04-09) * Absätze [0028] – [0047], [0072]; Abbildungen 2, 4-6 * ----- | 1-4,6-9, 15,16 | |
| Y,D | US 7 009 172 B2 (UNIV COMMUNITY COLLEGE SYS NEV [US]) 7. März 2006 (2006-03-07) * Spalte 5, Zeilen 6-20; Spalte 6, Zeilen 28-32; Spalte 10, Zeilen 1-12; Abbildungen 3, 4 * ----- | 1-4,6-9, 15,16 | |
| A | DE 10 2020 116547 A1 (ABBERIOR INSTRUMENTS GMBH [DE]) 23. Dezember 2021 (2021-12-23) * Absätze [0055], [0073] – [0080]; Abbildungen 5, 6 * ----- | 1-16 | RECHERCHIERTE SACHGEBIETE (IPC) G01N G02B |
| A | WEBER MICHAEL ET AL: "MINSTED fluorescence localization and nanoscopy", NATURE PHOTONICS, NATURE PUBLISHING GROUP UK, LONDON, Bd. 15, Nr. 5, 15. März 2021 (2021-03-15), Seiten 361-366, XP037523327, ISSN: 1749-4885, DOI: 10.1038/S41566-021-00774-2 [gefunden am 2021-03-15] * Zusammenfassung; Abbildung 1 * ----- | 1-16 | |

Der vorliegende Recherchenbericht wurde für alle Patentansprüche erstellt

| Recherchenort | Abschlußdatum der Recherche | Prüfer |
|---|---|---|
| München | 5. September 2023 | Flentje, Farida |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 23 16 3585

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2023

| Im Recherchenbericht angeführtes Patentdokument | Datum der Veröffentlichung | Mitglied(er) der Patentfamilie | Datum der Veröffentlichung |
|---|---|---|---|
| WO 2023006176 A1 | 02-02-2023 | KEINE | |
| DE 102016117096 B4 | 09-04-2020 | DE 102016117096 A1 | 23-03-2017 |
| | | JP 6730895 B2 | 29-07-2020 |
| | | JP 2017072586 A | 13-04-2017 |
| | | US 2017082844 A1 | 23-03-2017 |
| US 7009172 B2 | 07-03-2006 | EP 1604190 A2 | 14-12-2005 |
| | | JP 2006520022 A | 31-08-2006 |
| | | US 2004217270 A1 | 04-11-2004 |
| | | WO 2004079405 A2 | 16-09-2004 |
| DE 102020116547 A1 | 23-12-2021 | CN 115720626 A | 28-02-2023 |
| | | DE 102020116547 A1 | 23-12-2021 |
| | | EP 4168778 A1 | 26-04-2023 |
| | | US 2023120931 A1 | 20-04-2023 |
| | | WO 2021259967 A1 | 30-12-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004079405 A2
- JP 2000098238 A
- JP 2005241321 A
- DE 102016117096 B4
- DE 102011055367 A1
- DE 102013114860 B3
- WO 2022029283 A1
- EP 3372990 B1

**In der Beschreibung aufgeführte Nicht-Patentliteratur**

- **JÖRG ENDERLEIN.** Tracking of fluorescent molecules diffusing within membranes. *Appl. Phys. B,* 2000, vol. 71, 773-777
- **JÖRG ENDERLEIN.** Positional and Temporal Accuracy of Single Molecule Tracking. *Single Mol.,* vol. 1, 225-230, https://doi.org/10.1002/1438-5171
- **LEVI V. et al.** Scanning FCS, a novel method for three-dimensional particle tracking. *Biochem Soc Trans.,* Oktober 2003, vol. 31, 997-1000
- Trapping and Manipulating Single Molecules in Solution. **ADAM E. COHEN.** Dissertation. Stanford University, August 2006
- **KATAYAMA Y. et al.** Real-time nanomicroscopy via three-dimensional single-particle tracking. *Chemphyschem,* 05. Oktober 2009, vol. 10 (14), 2458-64
- **WEHNEKAMP, F. et al.** Nanoresolution real-time 3D orbital tracking for studying mitochondrial trafficking in vertebrate axons in vivo. *eLife,* 2019, vol. 8, e46059, https://doi.org/10.7554/eLife.46059
- **GREGG M. GALLATIN ; ANDREW J. BERGLUND.** Optimal laser scan path for localizing a fluorescent particle in two or three dimensions. *Opt. Express,* 2012, vol. 20, 16381-16393
- **BALZAROTTI F. et al.** Nanometer resolution imaging and tracking of fluorescent molecules with minimal photon fluxes. *Science,* 10. Februar 2017, vol. 355 (6325), 606-612
- *arXiv:1611.03401 [physics.optics,* 2016
- **LUCIANO A. MASULLO et al.** A common framework for single-molecule localization using sequential structured illumination. *Biophysical Reports,* 2022, vol. 2 (1), 100036, https://doi.org/10.1016/j.bpr.2021.100036